(19) **Europäisches Patentamt / European Patent Office / Office européen des brevets**

(11) **EP 4 640 861 A1**

(12) **EUROPEAN PATENT APPLICATION**
published in accordance with Art. 153(4) EPC

(43) Date of publication:
29.10.2025 Bulletin 2025/44

(51) International Patent Classification (IPC):
*C22C 38/00* (2006.01)    *C22C 38/60* (2006.01)
*C21D 8/02* (2006.01)    *C21D 9/46* (2006.01)

(21) Application number: 23906418.1

(22) Date of filing: 06.10.2023

(52) Cooperative Patent Classification (CPC):
**C22C 38/00; C22C 38/60;** C21D 8/02; C21D 9/46

(86) International application number:
**PCT/JP2023/036500**

(87) International publication number:
**WO 2024/135043 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 23.12.2022 JP 2022206592

(71) Applicant: NIPPON STEEL CORPORATION
Chiyoda-ku
Tokyo 100-8071 (JP)

(72) Inventor: YOKOYAMA, Takafumi
Tokyo 100-8071 (JP)

(74) Representative: Vossius & Partner
Patentanwälte Rechtsanwälte mbB
Siebertstrasse 3
81675 München (DE)

(54) **HOT-ROLLED STEEL SHEET**

(57) Provided is a hot rolled steel sheet having a predetermined chemical composition and a steel structure comprising, by area%, total of martensite and retained austenite: 2 to 30%, total of pearlite and cementite: 0 to 3%, and balance: ferrite and bainite, wherein a ratio of an area which crystal grains having a size of more than 12 $\mu$m occupy with respect to an observed area is 50% or less, in a texture measured at a sheet thickness center part, a maximum pole density of a group of {100}<011>, {211}<011>, {311}<011>, {110}<011>, and {332}<113> orientations is 8.0 or less, and when dividing an observed field of the steel structure in a sheet thickness direction at 2 $\mu$m intervals and measuring the total of the martensite and retained austenite at each divided region, a maximum value of the total is 3.0 times or less of an average value of the total.

EP 4 640 861 A1

## Description

FIELD

The present invention relates to a hot rolled steel sheet.

BACKGROUND

In recent years, in the automotive industry, lighter weight of car bodies has been sought from the viewpoint of improvement of fuel efficiency. To achieve both lighter weight of car bodies and collision safety, increasing the strength of the steel sheet used is one effective method. A high strength steel sheet is being developed from this background. On the other hand, along with higher strength, the formability of a steel sheet generally falls. For this reason, in development of a high strength steel sheet, it is important to secure a certain level or more of formability while raising the strength.

In relation to this, for example, PTL 1 describes a high strength hot rolled steel sheet having a predetermined chemical composition, a structure containing an area ratio of 80% or more of polygonal ferrite, etc., a $\sigma$HV of 30 or less when a standard deviation of microhardness of any 50 grains of polygonal ferrite present in a range from a center plane to $\pm 100$ $\mu$m in the sheet thickness direction is defined as $\sigma$HV, Ti-containing carbides present in $5\times10^7$ /mm$^2$ or more in the grains of the polygonal ferrite, and 50% or more of the Ti-containing carbides with aspect ratios of ratios of lengths of long sides with respect to lengths of short sides of less than 3, and a tensile strength of 540 MPa or more. Further, PTL 1 teaches that in mainly polygonal ferrite structure having excellent hole expandability, by raising the strength by utilizing precipitation hardening of Ti and reducing the variation in hardness of the individual ferrite grains and by reducing the Ti-containing carbides with a nonequiaxial shape with a ratio of aspect ratio 3 or more, the hole expandability can be remarkably improved.

PTL 2 describes a hot rolled steel sheet having a predetermined chemical composition and having an area ratio of ferrite of 10 to 55% at a 1/4 depth position of sheet thickness from the surface, a total area ratio of bainite and martensite of 45 to 90%, a total area ratio of ferrite, bainite, and martensite of 90% or more, an average crystal grain size of 12.0 $\mu$m or less, a maximum pole density of a group of {100}<011>, {211}<011>, {311}<011>, {110}<011>, and {332}<113> orientations in a texture measured at a sheet thickness center part of 8.0 or less, a total of pole densities of {211}<011> and {332} <113> of 10.0 or less, and a tensile strength of 950 MPa or more. Further, PTL 2 teaches that, according to the above, it is possible to provide a hot rolled steel sheet which is high in strength and excellent in elongation, stretch flangeability, and low temperature toughness.

[CITATIONS LIST]

[PATENT LITERATURE]

[PTL 1] WO2017/022025
[PTL 2] WO2019/009410

SUMMARY

[TECHNICAL PROBLEM]

A hot rolled steel sheet is produced by hot rolling a cast slab, but sometimes there is anisotropy in the structure and various mechanical properties between the rolling direction (L direction) and the width direction (C direction) perpendicular to that along with the hot rolling. Further, if the degree of such anisotropy becomes greater, the hole expandability (stretch flangeability) with respect to a deformation operation over the entire circumference falls. On the other hand, due to further improvement of formability and demands of users, etc., there is a high need for a high strength hot rolled steel sheet not only improved in hole expandability, but also reduced in difference in the uniformity of elongation, ultimate deformability, and other mechanical properties in the L direction and C direction.

The present invention was made in consideration with such a situation and has as its object the provision of a hot rolled steel sheet high in strength, yet improved in hole expandability and reduced in difference in L direction and C direction in uniform elongation and ultimate deformability by a novel constitution.

[SOLUTION TO PROBLEM]

The inventors engaged in studies to achieve the above object while focusing in particular on the steel structure of a hot rolled steel sheet. As a result, the inventors discovered that by configuring the steel structure of a hot rolled steel sheet having a predetermined chemical composition so as to include martensite and retained austenite in a specific ratio in total, it is possible to achieve high strength while limiting the ratio of crystal grains having relatively large size in the steel structure to within a predetermined range and suppressing the growth of texture in the steel structure, it is possible to improve the hole expandability and reduce the difference in the L direction and C direction in uniform elongation and that further by reducing the variation in the martensite and retained austenite contained in the steel structure in the sheet thickness direction, it is possible to reduce the difference in the L direction and C direction in the ultimate deformability and thereby completed the present invention.

The present invention able to achieve this object is as follows:

(1) A hot rolled steel sheet having a chemical composition comprising, by mass%,

C: 0.025 to 0.080%,
Si: 0.001 to 2.000%,
Mn: 1.000 to 2.000%,
Ti: 0.080 to 0.200%,
Al: 0.200 to 1.000%,
P: 0.050% or less,
S: 0.0100% or less,
N: 0.0100% or less,
O: 0.0100% or less,
Cr: 0 to 1.00%,
Mo: 0 to 1.00%,
Cu: 0 to 1.00%,
Ni: 0 to 1.00%,
Co: 0 to 1.00%,
Nb: 0 to 0.200%,
V: 0 to 1.00%,
W: 0 to 1.00%,
Sn: 0 to 1.00%,
Sb: 0 to 0.50%,
Zn: 0 to 1.00%,
B: 0 to 0.0050%,
Ca: 0 to 0.0100%,
Mg: 0 to 0.0100%,
Zr: 0 to 0.0100%,
Bi: 0 to 0.0100%,
Hf: 0 to 0.0100%,
As: 0 to 0.1000%,
REM: 0 to 0.0100%, and
balance: Fe and impurities, and
a steel structure at a cross-section of a rolling direction of an observed range centered at 1/4 thickness from a surface comprising, by area%,
a total of martensite and retained austenite: 2 to 30%,
a total of pearlite and cementite: 0 to 3%, and
balance: ferrite and bainite, wherein
a ratio of an area which crystal grains having a size of more than 12 $\mu$m occupy with respect to an observed area is 50% or less,
in a texture measured at a sheet thickness center part, a maximum pole density of a group of {100}<011>, {211}<011>, {311}<011>, {110}<011>, and {332}<113> orientations is 8.0 or less, and
when dividing an observed field of the steel structure in a sheet thickness direction at 2 $\mu$m intervals and measuring the total of the martensite and retained austenite at each divided region, a maximum value of the total is 3.0 times or less of an average value of the total.

(2) The hot rolled steel sheet according to the above (1), wherein the chemical composition includes, by mass%, Si:

0.001 to 0.500% and a number density of recessed parts with a depth of more than 5 μm present at a surface is 1.0/mm or less per surface length.

(3) The hot rolled steel sheet according to the above (1) or (2), wherein the chemical composition includes, by mass%, at least one of

Cr: 0.001 to 1.00%,
Mo: 0.001 to 1.00%,
Cu: 0.001 to 1.00%,
Ni: 0.001 to 1.00%,
Co: 0.001 to 1.00%,
Nb: 0.001 to 0.200%,
V: 0.001 to 1.00%,
W: 0.001 to 1.00%,
Sn: 0.001 to 1.00%,
Sb: 0.001 to 0.50%,
Zn: 0.001 to 1.00%,
B: 0.0001 to 0.0050%,
Ca: 0.0001 to 0.0100%,
Mg: 0.0001 to 0.0100%,
Zr: 0.0001 to 0.0100%,
Bi: 0.0001 to 0.0100%,
Hf: 0.0001 to 0.0100%,
As: 0.0001 to 0.1000%, and
REM: 0 to 0.0100%.

(4) The hot rolled steel sheet according to any one of the above (1) to (3), wherein the hot rolled steel sheet is a plated steel sheet provided with a plating layer on at least one surface.

(5) A part including the hot rolled steel sheet according to any one of the above (1) to (4).

[ADVANTAGEOUS EFFECTS OF INVENTION]

According to the present invention, it is possible to provide a hot rolled steel sheet which is high in strength yet is improved in hole expandability and is reduced in difference of in L direction and C direction in uniform elongation and ultimate deformability.

DESCRIPTION OF EMBODIMENTS

<Hot Rolled Steel Sheet>

The hot rolled steel sheet according to an embodiment of the present invention has a chemical composition comprising, by mass%,

C: 0.025 to 0.080%,
Si: 0.001 to 2.000%,
Mn: 1.000 to 2.000%,
Ti: 0.080 to 0.200%,
Al: 0.200 to 1.000%,
P: 0.050% or less,
S: 0.0100% or less,
N: 0.0100% or less,
O: 0.0100% or less,
Cr: 0 to 1.00%,
Mo: 0 to 1.00%,
Cu: 0 to 1.00%,
Ni: 0 to 1.00%,
Co: 0 to 1.00%,
Nb: 0 to 0.200%,
V: 0 to 1.00%,

W: 0 to 1.00%,
Sn: 0 to 1.00%,
Sb: 0 to 0.50%,
Zn: 0 to 1.00%,
B: 0 to 0.0050%,
Ca: 0 to 0.0100%,
Mg: 0 to 0.0100%,
Zr: 0 to 0.0100%,
Bi: 0 to 0.0100%,
Hf: 0 to 0.0100%,
As: 0 to 0.1000%,
REM: 0 to 0.0100%, and
balance: Fe and impurities, and
a steel structure at a cross-section of a rolling direction of an observed range centered at 1/4 thickness from a surface comprising, by area%,
a total of martensite and retained austenite: 2 to 30%,
a total of pearlite and cementite: 0 to 3%, and
balance: ferrite and bainite, wherein
a ratio of an area which crystal grains having a size of more than 12 $\mu$m occupy with respect to an observed area is 50% or less,
in a texture measured at a sheet thickness center part, a maximum pole density of a group of {100}<011>, {211}<011>, {311}<011>, {110}<011>, and {332}<113> orientations is 8.0 or less, and
when dividing an observed field of the steel structure in a sheet thickness direction at 2 $\mu$m intervals and measuring the total of the martensite and retained austenite at each divided region, a maximum value of the total is 3.0 times or less of an average value of the total.

As explained previously, it is known that there is anisotropy in structure and various mechanical properties between a rolling direction (L direction) and width direction perpendicular to the same (C direction) due in part to the hot rolling at the time of production of a steel sheet. If the extent of such anisotropy becomes greater, the hole expandability with respect to operations for deformation over the entire circumference falls. Further, the difference in the L direction and the C direction in uniform elongation and ultimate deformability (below, also referred to simply as the "LC difference") also becomes greater. To improve the hole expandability and reduce such uniform elongation and LC difference of the ultimate deformability, for example, it is possible to improve more the formability of a high strength steel sheet used in automobiles and other applications. However, realizing both higher strength of a steel sheet and these properties is generally extremely difficult. Therefore, the inventors engaged in studies to realize both higher strength of a steel sheet and improvement of these properties while focusing in particular on the steel structure of a hot rolled steel sheet.

First, the inventors, as explained in detail later in relation to the chemical composition and method of production of a hot rolled steel sheet, controlled the C content in the steel to a 0.080 mass% or less relatively low range so as to reduce the LC difference of the ultimate deformability. On the other hand, the inventors discovered that despite the relatively low C content, by utilizing precipitation hardening by Ti carbides and configuring the steel structure of a hot rolled steel sheet so as to include martensite and retained austenite in a specific ratio in total, more specifically so as to include a total of the martensite and retained austenite in 2 to 30%, it is possible to achieve a high strength, for example, a high strength of a tensile strength of 780 MPa or more.

Next, the inventors engaged in further studies to improve the hole expandability and reducing the LC difference of other mechanical properties while focusing in particular on refinement of the steel structure and the texture. As a result, the inventors discovered that by limiting the ratio of crystal grains having relatively large size in the steel structure to within a predetermined range and suppressing the growth of texture at the steel structure, more specifically by limiting the ratio of the area which crystal grains having a size of more than 12 $\mu$m occupy with respect to the observed area in the steel structure to 50% or less and controlling the maximum pole density of the group of {100}<011>, {211}<011>, {311 }<011>, {110}<011>, and {332}<113> orientations in the texture measured at the sheet thickness center part of the hot rolled steel sheet to 8.0 or less, it is possible to improve the hole expandability and reduce the LC difference of uniform elongation. While not intending to be bound to any specific theory, it is believed that by limiting the ratio of the area which crystal grains having a size of more than 12 $\mu$m occupy with respect to the observed area of the steel structure to 50% or less to make the steel structure finer and more uniform, it is possible to reduce the hardness difference in the steel structure compared with the case where the ratio of the area which crystal grains having a size of more than 12 $\mu$m occupy with respect to the observed area is more than 50% and possible to improve the hole expandability by reduction of such hardness difference.

On the other hand, explaining the features of the texture in more detail, first, if analyzing the sheet thickness cross-section of the hot rolled steel sheet, the orientations of the crystals differ between the sheet thickness center part and the sheet thickness surface layer part directly receiving the effect of the rolling. However, in a hot rolled steel sheet, at the time of hot rolling, friction between the rolls and steel sheet causes shear deformation in the reverse directions between the front and back of the steel sheet, and therefore in the texture as well, symmetrical orientations grow at the front and back of the steel sheet. For this reason, the effects of the texture on the mechanical properties cancel out each other at the front and back. As a result, regarding the relationship of the texture and mechanical properties, it is believed that rather than the texture of the sheet thickness surface layer part, the texture of the sheet thickness center part corresponds well with the mechanical properties. For such a reason, in the hot rolled steel sheet according to an embodiment of the present invention, by controlling the texture at the sheet thickness center part, improvement of the hole expandability and reduction of the LC difference of the uniform elongation are realized. Here, for the crystal orientation of the rolled sheet, usually a crystal orientation vertical to the rolling surface is expressed by {hkl} or (hkl) while a crystal orientation parallel to the rolling direction is expressed by <uvw> or [uvw]. {hkl} and <uvw> are general terms for equivalent planes and orientations, while (hkl) and [uvw] indicate individual crystal planes. In the hot rolled steel sheet according to an embodiment of the present invention, mainly body centered cubic structures (bcc structures) are covered, so, for example, (110), (-110), (1-10), (-1-10), (101), (-101), (10-1), (-10-1), (011), (0-11), (01-1), and (0-1-1) are equivalent and cannot be differentiated. In an embodiment of the present invention, these orientations are expressed overall as {110}.

As the main orientations of growth of the texture of the sheet thickness center part of the hot rolled steel sheet, there are {100}<011>, {211}<011>, {311}<011>, {110}<011>, and {332}<113>. If growth occurs in any one orientation of this group of orientations, planar anisotropy in the mechanical properties of the hot rolled steel sheet becomes higher and the hole expandability corresponding to a deformation operation over the entire circumferential direction falls particularly remarkably. Therefore, to improve the hole expandability and reduce the planar anisotropy of other mechanical properties, it is important to suppress the growth in all of the group of orientations and randomize the texture. Therefore, in a hot rolled steel sheet according to an embodiment of the present invention, if calculating the pole density of the group of orientations, by controlling the maximum value of the pole densities, i.e., the maximum pole density, to 8.0 or less, it is made possible to sufficiently suppress growth of texture and randomize the texture more. As a result, the hole expandability can be further improved by combination with refinement of the steel structure and the LC difference of uniform elongation can be remarkably reduced. Here, the "pole density" means the ratio of degree of control to a specific orientation of the test material with respect to a standard sample not being controlled to a specific orientation.

However, by refining the steel structure and suppressing the growth of the texture, it was possible to improve the hole expandability and reduce the LC difference of uniform elongation, but it was not necessarily possible to sufficiently reduce the LC difference of the ultimate deformability. Therefore, the inventors further studied the LC difference of the ultimate deformability. As a result, the inventors discovered that by reducing the variation in the martensite and retained austenite contained in the steel structure in the sheet thickness direction, more specifically, when dividing the observed field of the steel structure in the sheet thickness direction at 2 $\mu$m intervals and measuring the total of the martensite and retained austenite in each divided region, by controlling the maximum value of the total to 3.0 times or less of the average value of the total, it is possible to reduce the LC difference of the ultimate deformability.

The hot rolled steel sheet according to an embodiment of the present invention, as explained above, is configured to achieve high strength by containing, by area%, a total of the martensite and retained austenite of 2 to 30%. In relation to this, to raise the hardenability of steel, it is necessary to include Mn in a predetermined amount in the steel. In a hot rolled steel sheet according to an embodiment of the present invention, the Mn content is 1.000 mass% or more. However, in this case, if there is a region present in which Mn segregates in the steel in the production process, martensite or retained austenite becomes easily formed in that region at the time of cooling after hot rolling. As a result, in the finally obtained hot rolled steel sheet, conceivably a region is formed in which martensite and/or retained austenite is locally formed in a large amount and an LC difference of the ultimate deformability is caused. Therefore, as explained later in detail in relation to the method of production of the hot rolled steel sheet, the inventors discovered that mainly performing the casting step and hot rolling step under suitable conditions, it is possible to sufficiently suppress Mn segregation in the steel and thereby reduce the variation in the martensite and retained austenite formed in subsequent cooling step in the sheet thickness direction to within the above predetermined range. As a result, according to the hot rolled steel sheet according to an embodiment of the present invention, martensite and retained austenite can be made uniformly present in the steel, and therefore it becomes possible to reliably and sufficiently reduce the LC difference of the ultimate deformability.

In the hot rolled steel sheet according to an embodiment of the present invention, as explained above, to achieve high strength, improvement of the hole expandability, and reduction of the LC difference of uniform elongation, the structure is configured to include the total of the martensite and retained austenite in 2 to 30%, the ratio of the area which crystal grains having a size of more than 12 $\mu$m occupy in the steel structure is limited to a predetermined range, and the maximum pole density of the group of {100}<011>, {211}<011>, {311}<011>, {110}<011>, and {332}<113> orientations at the sheet thickness center part is controlled to 8.0 or less. Therefore, maintaining the configuration of the steel structure controlled in such a way while further controlling the variation of the martensite and retained austenite included in the steel structure in the sheet thickness direction to within the desired range is extremely difficult. As opposed to this, as explained later in detail relating to the method of production of the hot rolled steel sheet, in an embodiment of the present invention, the C content in the steel is limited to 0.080% or less to form the δ phase to promote the dispersion of Mn at the time of solidification in the casting step and introduction of strain and recrystallization are repeated in the subsequent rough rolling so as to further promote the dispersion of Mn into the steel and thereby realize a steel structure with variation in martensite and retained austenite in the sheet thickness direction reduced to the above predetermined range. As a result, according to the hot rolled steel sheet according to an embodiment of the present invention, despite being high strength, for example, high strength of a tensile strength of 780 MPa or more, the hole expandability can be improved and the difference between the L direction and C direction in the uniform elongation and ultimate deformability can be reduced. Therefore, the hot rolled steel sheet according to an embodiment of the present invention can reliably achieve the contradictory properties of high strength and excellent formability, and therefore is particularly useful in use in the automobile field where realization of both of these properties is sought.

Below, the hot rolled steel sheet according to an embodiment of the present invention will be explained in more detail. In the following explanation, the "%" of the units of contents of the elements, unless otherwise indicated, means "mass%". Further, in this Description, the "to" showing a numerical range, unless otherwise indicated, is used in the sense of the numerical values described before and after the same being included as the lower limit value and the upper limit value.

[C: 0.025 to 0.080%]

C (carbon) is an element essential for securing the steel sheet strength. To sufficiently obtain such an effect, the C content is 0.025% or more. The C content may also be 0.030% or more, 0.035% or more, 0.040% or more, or 0.045% or more. On the other hand, if excessively containing C, it is believed to be not possible to sufficiently suppress the Mn segregation at the time of the continuous casting step and as a result reduce the variation in the martensite and retained austenite in the sheet thickness direction to within the desired range. Therefore, the C content is 0.080% or less. The C content may also be 0.075% or less, 0.070% or less, 0.065% or less, or 0.060% or less.

[Si: 0.001 to 2.000%]

Si (silicon) is an element suppressing the formation of iron carbides and contributing to improvement of strength and formability. To obtain these effects, the Si content is 0.001% or more. The Si content may also be 0.010% or more, 0.050% or more, 0.100% or more, 0.200% or more, 0.300% or more, or 0.400% or more. On the other hand, Si is a ferrite forming element, and therefore the ferrite transformation start temperature (Ar3 point) is made to rise. For this reason, if excessively including Si, sometimes the temperature at which ferrite is formed is made excessively high, whereby formation of coarse ferrite crystal grains is invited and the hole expandability falls. Therefore, the Si content is 2.000% or less. The Si content may also be 1.500% or less, 1.000% or less, 0.800% or less, 0.600% or less, or 0.500% or less. In particular, if limiting the Si content to 0.500% or less, formation of Si scale can be suppressed. As explained in detail later in relation to the method of production of the hot rolled steel sheet, by limiting the Si content to 0.500% or less and additionally performing descaling under suitable conditions before finish rolling, it is possible to obtain a hot rolled steel sheet having excellent surface properties and more remarkably reduce the LC difference of the ultimate deformability.

[Mn: 1.000 to 2.000%]

Mn (manganese) is a powerful austenite stabilizing element and an element effective for making a steel sheet high in strength. To sufficiently obtain such an effect, the Mn content is 1.000% or more. The Mn content may also be 1.100% or more, 1.200% or more, 1.300% or more, or 1.500% or more. On the other hand, if excessively containing Mn, sometimes excessive formation of martensite is invited and the hole expandability is made to fall. Therefore, the Mn content is 2.000% or less. The Mn content may also be 1.900% or less, 1.800% or less, 1.700% or less, or 1.600% or less.

[Ti: 0.080 to 0.200%]

Ti (titanium) is an element precipitating in steel as TiC or other Ti carbides and contributing to improvement of strength by precipitation hardening. Further, it is an element contributing to refinement of the crystal grains by the pinning effect. To sufficiently obtain these effects, the Ti content is 0.080% or more. The Ti content may also be 0.090% or more, 0.100% or more, 0.110% or more, or 0.120% or more. On the other hand, if excessively containing Ti, the Ti carbides become coarse and the effect of improvement of strength by precipitation hardening cannot be sufficiently manifested. Not only that, sometimes a reduction of hole expandability and a drop in the LC difference of uniform elongation is invited. Therefore, the Ti content is 0.200% or less. The Ti content may also be 0.180% or less, 0.160% or less, 0.150% or less, or 0.140% or less.

[Al: 0.200 to 1.000%]

Al (aluminum) is an element which acts as a deoxidizer and stabilizes ferrite. If the Al content is small, sometimes such an effect cannot be sufficiently obtained and/or the desired steel structure cannot be obtained. Therefore, the Al content is 0.200% or more. The Al content may also be 0.250% or more, 0.300% or more, 0.350% or more, or 0.400% or more. On the other hand, Al is an element forming ferrite, and therefore raises the ferrite transformation start temperature (Ar3 point). For this reason, if Al is excessively included, the temperature where ferrite is formed becomes excessively high whereby sometimes formation of coarse ferrite crystal grains is invited and the hole expandability falls. Therefore, the Al content is 1.000% or less. The Al content may also be 0.800% or less, 0.600% or less, or 0.500% or less.

[P: 0.050% or Less]

P (phosphorus) is a solution strengthening element and an element effective for making a steel sheet high in strength, but excessive addition causes the weldability and toughness to deteriorate. Therefore, the P content is 0.050% or less. The P content is preferably 0.045% or less, 0.035% or less, or 0.020% or less. The P content may also be 0%, but to drastically reduce the P content, the dephosphorization cost becomes high, and therefore from an economic viewpoint, the lower limit is preferably 0.0001%.

[S: 0.0100% or Less]

S (sulfur) is an element contained as an impurity and forms MnS in the steel to cause the toughness and hole expandability to deteriorate. Therefore, the S content is 0.0100% or less as a range where the toughness and hole expandability do not remarkably deteriorate. The S content is preferably 0.0050% or less, 0.0040% or less, or 0.0030% or less. The S content may also be 0%, but to drastically reduce the S content, the desulfurization cost becomes high, and therefore from an economic viewpoint, the lower limit is preferably 0.0001%.

[N: 0.0100% or Less]

N (nitrogen) is an element contained as an impurity. If the N content is large, coarse nitrides are formed in steel and sometimes the bendability and hole expandability are made to deteriorate. Therefore, the N content is 0.0100% or less. The N content is preferably 0.0080% or less, 0.0060% or less, or 0.0050% or less. The N content may also be 0%, but to drastically reduce the N content, the denitriding cost becomes high, and therefore from an economic viewpoint, the lower limit is preferably 0.0001%.

[O: 0.0100% or Less]

O (oxygen) is an element contained as an impurity. If the O content is large, coarse oxides are formed in the steel and sometimes the bendability and hole expandability are made to deteriorate. Therefore, the O content is 0.0100% or less. The O content is preferably 0.0080% or less, 0.0060% or less, or 0.0050% or less. The O content may also be 0%, but from the viewpoint of the production cost, the lower limit is preferably 0.0001%.
The basic chemical composition of the hot rolled steel sheet according to an embodiment of the present invention is as explained above. Furthermore, the hot rolled steel sheet may, in accordance with need, include at least part of the following elements in place of part of the Fe of the balance.

[Cr: 0 to 1.00%, Mo: 0 to 1.00%, Cu: 0 to 1.00%, Ni: 0 to 1.00%, Co: 0 to 1.00%, Nb: 0 to 0.200%, V: 0 to 1.00%, W: 0 to 1.00%, Sn: 0 to 1.00%, Sb: 0 to 0.50%, and B: 0 to 0.0050%]

Cr (chromium), Mo (molybdenum), Cu (copper), Ni (nickel), Co (cobalt), Nb (niobium), V (vanadium), W (tungsten), Sn (tin), Sb (antimony), and B (boron) are all elements effective for making a steel sheet high in strength. The contents of these elements may also be 0%, but to obtain such an effect, at least one of these elements may be included in the hot rolled steel sheet in accordance with need. However, even if excessively including these elements, the effect becomes saturated and a rise in production costs is liable to be invited. Therefore, the Cr, Mo, Cu, Ni, Co, V, W, and Sn contents are respectively 1.00% or less and may also be 0.60% or less, 0.50% or less, or 0.30% or less. Similarly, the Nb content is 0.200% or less and may also be 0.100% or less or 0.060% or less. Similarly, the Sb content is 0.50% or less and may also be 0.30% or less or 0.10% or less. Similarly, the B content is 0.0050% or less and may also be 0.0020%. Regarding the lower limit values of these elements, for example, the Cr, Mo, Cu, Ni, Co, V, W, Sn, and Sb contents may also be 0.001% or more or 0.01% or more. Similarly, the Nb content may also be 0.001% or more or 0.005% or more. Similarly, the B content may also be 0.0001% or more or 0.0005% or more.

[Zn: 0 to 1.00%, Ca: 0 to 0.0100%, Mg: 0 to 0.0100%, Zr: 0 to 0.0100%, Bi: 0 to 0.0100%, Hf: 0 to 0.0100%, and REM: 0 to 0.0100%]

Zn (zinc) is an element effective for controlling the shape of steel inclusions, Ca (calcium), Mg (magnesium), Zr (zirconium), Hf (hafnium), and REM (rare earth metal) are elements contributing to fine dispersion of the steel inclusions, and Bi (bismuth) is an element lightening the microsegregation of Mn, Si, and other substitution type alloy elements in the steel. The contents of these elements may also be 0%, but the elements contribute to improvement of the formability of a steel sheet, and therefore at least one of these elements may be contained in the hot rolled steel sheet in accordance with need. However, even if excessively containing these elements, the effect becomes saturated and a rise in production costs is liable to be invited. Therefore, the Zn content is 1.00% or less and may also be 0.50% or less or 0.20% or less. Similarly, the Ca, Mg, Zr, Bi, Hf, and REM contents are respectively 0.0100% or less and may also be 0.0080% or less, 0.0060% or less, or 0.0030% or less. Regarding the lower limit value of these elements, for example, the Zn content may also be 0.001% or more or 0.01% or more. Similarly, the Ca, Mg, Zr, Bi, Hf, and REM contents may also be respectively 0.0001% or more or 0.0005% or more.

[As: 0 to 0.1000%]

As (arsenic) is an element effective for improvement of the corrosion resistance. The As content may also be 0%, but to obtain such an effect, the As content is preferably 0.0001% or more and may also be 0.0010% or more, 0.0050% or more, or 0.0100% or more. On the other hand, even if excessively containing As, the effect becomes saturated. Inclusion more than necessary in a steel sheet invites a rise in production costs. Therefore, the As content is 0.1000% or less and may also be 0.0500% or less, 0.0300% or less, or 0.0200% or less.

In the hot rolled steel sheet according to an embodiment of the present invention, the balance aside from the above elements is comprised of Fe and impurities. The "impurities" are constituents, etc., entering due to the ore, scrap, or other raw materials and other various factors in the production process when industrially producing the hot rolled steel sheet.

The chemical composition of the hot rolled steel sheet according to an embodiment of the present invention may be measured by a general analysis method. For example, the chemical composition of the hot rolled steel sheet may be measured using inductively coupled plasma-atomic emission spectrometry (ICP-AES). C and S can be measured using the combustion-infrared absorption method, N using the inert gas melting-thermal conductivity method, and O using the inert gas melting-nondispersive type infrared absorption method.

[Steel Structure]

[Total of Martensite and Retained Austenite: 2 to 30%, Total of Pearlite and Cementite: 0 to 3%, and Balance: Ferrite and Bainite]

In the hot rolled steel sheet according to an embodiment of the present invention, the steel structure at the rolling direction cross-section of the observed range centered at 1/4 thickness from the surface of the hot rolled steel sheet comprised, by area%, total of martensite and retained austenite: 2 to 30%, total of pearlite and cementite: 0 to 3%, and balance: ferrite and bainite.

In an embodiment of the present invention, "martensite" encompasses quenched martensite (fresh martensite) and tempered martensite. Further, retained austenite transforms to martensite by work induced transformation during deformation in the steel sheet. Therefore, by inclusion of martensite and retained austenite, it is possible to make the hot rolled steel sheet high in strength. To obtain the desired high strength, the area ratio of the total of the martensite and retained austenite may be 2% or more and may also be 5% or more, 10% or more, or 15% or more. On the other hand, if excessively containing martensite and retained austenite, the strength becomes higher, but the hole expandability falls. Therefore, the area ratio of the total of the martensite and retained austenite is 30% or less and may also be 28% or less, 25% or less, 22% or less, or 20% or less.

Pearlite includes hard and coarse cementite and becomes a starting point of fracture at the time of plastic deformation, and therefore sometimes the hole expandability of the steel sheet is made to fall. Therefore, its content is, together with cementite, an area% of 0 to 3% and may also be 0 to 2% or 0 to 1%.

The balance of the steel structure in the hot rolled steel sheet according to an embodiment of the present invention is comprised of ferrite and bainite. Ferrite is excellent in ductility and contributes to improvement of elongation. The bainite may be any of upper bainite having carbides between laths, lower bainite having carbides inside laths, bainitic ferrite not having carbides, or granular bainitic ferrite with lath boundaries of bainite recovering and becoming unclear or mixed structures of the same.

[Identification of Steel Structure and Calculation of Area Ratio]

The steel structure is identified and the area ratio is calculated by a secondary electron image captured using an FE-SEM. First, a sample is taken at the sheet thickness cross-section parallel to the rolling direction of the hot rolled steel sheet using the sheet thickness cross-section at the center position in the width direction as the observed surface. The observed surface is machine polished to finish it to a mirror surface, then a Nital solution is used for etching. Next, at one or more observed fields in a range of 1/8 thickness to 3/8 thickness centered at 1/4 thickness from the surface of the steel sheet at the observed surface, a secondary electron image is captured for an area of a total of $2.0 \times 10^{-9}\, m^2$ or more. Using the total secondary electron image, the area ratios of the total of the martensite and retained austenite, pearlite (total of the pearlite and cementite), and the balance, i.e., ferrite and bainite, are measured. First, regions with large brightnesses and with no sub structures appearing by etching are judged martensite and retained austenite. Next, a region with cementite precipitated in a lamellar state is judged to be pearlite (total of pearlite and cementite). The balance besides the above structures is judged to be ferrite and bainite. For reference, a region with a small brightness and with no sub structures observed can be judged as ferrite, while a region not corresponding to either of the above can be judged as bainite. The area ratios of the structures identified in this way are counted by the point counting method.

[Ratio of Area Which Crystal Grains of Size of More Than 12 $\mu$m Occupy With Respect to Observed Area: 50% or Less]

In an embodiment of the present invention, the ratio of the area which crystal grains having a size of more than 12 $\mu$m occupy with respect to the observed area of the steel structure is 50% or less. In the present invention, the "size of the crystal grains" means the circle equivalent diameter of crystal grains when defining regions surrounded with boundaries with orientation differences of 15° or more as "crystal grains". By limiting the ratio of the area which crystal grains having a size of more than 12 $\mu$m occupy with respect to the observed area of the steel structure to 50% or less to make the steel structure more refined and uniform, it is possible to reduce the hardness difference in the steel structure compared with the case of such requirements not being satisfied and becomes possible to improve the hole expandability due to reduction of such hardness difference. From the viewpoint of improvement of the hole expandability, the lower the ratio of the area, the more preferable. For example, it may also be 40% or less, 35% or less, or 30% or less. The lower limit may also be 0%. While not particularly limited, for example, the ratio of the area may also be 5% or more, 10% or more, or 15% or more.

[Measurement of Ratio of Area Which Crystal Grains of Size of More Than 12 $\mu$m Occupy With Respect to Observed Area]

The ratio of the area which crystal grains having a size of more than 12 $\mu$m occupy with respect to the observed area is measured by electron backscattered diffraction (EBSD). More specifically, first, a sample is taken from a steel sheet so that a sheet thickness cross-section in a direction parallel to the rolling direction and vertical to the sheet surface becomes the examined surface. Next, a region of 200 $\mu$m in the rolling direction of the steel sheet and 100 $\mu$m in the rolling surface normal direction at a 1/4 depth position of sheet thickness from the steel sheet surface is analyzed by EBSD at 0.2 $\mu$m measurement intervals so as to acquire crystal orientation information. Here, the EBSD analysis is performed using an apparatus comprised of a thermal field emission type scan electron microscope (JSM-7001F made by JEOL) and an EBSD detector (HIKARI detector made by TSL) by a 50 to 300 points/s analysis speed. Next, for the obtained crystal orientation information, a region surrounded by boundaries with an orientation difference of 15° or more is defined as a crystal grain, and the ratio of crystal grains with a circle equivalent diameter of more than 12 $\mu$m among those crystal grains with the observed area is found. The crystal grains defined as explained above can be calculated using the software "OIM Analysis™" attached to the EBSD analysis apparatus.

[Maximum Pole Density of Group of {100}<011>, {211}<011>, {311}<011>, {110}<011>, and {332}<113> Orientations at Texture Measured at Sheet Thickness Center Part: 8.0 or Less]

In an embodiment of the present invention, the maximum pole density of the group of {100}<011>, {211}<011>, {311}<011>, {110}<011>, and {332}<113> orientations at the texture measured at the sheet thickness center part of the hot rolled steel sheet is 8.0 or less. By controlling the maximum pole density of the group of orientations at the texture measured at the sheet thickness center part of the hot rolled steel sheet to 8.0 or less, it becomes possible to randomize the texture more. As a result, it becomes possible to further improve the hole expandability and remarkably reduce the LC difference of uniform elongation by combination with the previously explained refinement of the steel structure. From the viewpoint of the improvement of the hole expandability and the reduction of the LC difference of uniform elongation, the more random the texture is made, the more preferable, i.e., the lower the maximum pole density of the group of {100}<011>, {211}<011>, {311}<011>, {110}<011>, and {332}<113> orientations, the more preferable. For example, it may be 7.0 or less, 6.5 or less, or 6.0 or less. The lower limit is not particularly prescribed, but, for example, the maximum pole density of the group of orientations may be 2.0 or more, 2.5 or more, 3.0 or more, 3.5 or more, 4.0 or more, or 4.5 or more.

[Measurement of Maximum Pole Density of Group of {100}<011>, {211}<011>, {311}<011>, {110}<011>, and {332} <113> Orientations]

The maximum pole density of the group of {100}<011>, {211}<011>, {311}<011>, {110}<011>, and {332}<113> orientations at the texture of the sheet thickness center part is measured by EBSD. More specifically, first, a sample is taken from a steel sheet so that a sheet thickness cross-section in a direction parallel to the rolling direction and vertical to the sheet surface becomes the examined surface. Next, a region of 1000 $\mu$m in the rolling direction of the steel sheet and 100 $\mu$m in the rolling surface normal direction at a 1/2 depth position of sheet thickness from the steel sheet surface is analyzed by EBSD at 1 $\mu$m measurement intervals so as to acquire crystal orientation information of this rectangular region. EBSD analysis is performed using an apparatus comprised of a thermal field emission type scan electron microscope (JSM-7001F made by JEOL) and an EBSD detector (HIKARI detector made by TSL) by a 50 to 300 points/s analysis speed. Next, the software "OIM Analysis™" attached to the EBSD analysis apparatus is used to calculate the ODF (orientation distribution function) of this rectangular region from the crystal orientation information of this rectangular region. As the method for calculation of the ODF, harmonic series expansion was used with an expansion order of 16. Further, the calculation was performed considering symmetry (orthotropic). Due to this, it is possible to find the pole density of the crystal orientations of {100}<011>, {211}<011>, {311}<011>, {110}<011>, and {332}<113>. The maximum value of these pole densities is determined as the " maximum pole density of the group of {100}<011>, {211}<011>, {311}<011>, {110}<011>, and {332}<113> orientations at the texture measured at the sheet thickness center part. Note that, the "crystal orientation" here expresses the crystal orientation in a direction vertical to the steel sheet surface, and therefore at the time of analysis, it is necessary to combine the measurement coordinate system and sample coordinate system of the crystal orientation data considering the direction of the measurement sample set.

[Maximum Value of Total of Martensite and Retained Austenite at Sheet Thickness Direction of 3.0 Times or Less of Average Value of Total]

In an embodiment of the present invention, when dividing the observed field of the steel structure in the sheet thickness direction at 2 $\mu$m intervals and measuring the total of the martensite and retained austenite at each divided region, the maximum value of the total is 3.0 times or less of the average value of the total. By controlling the maximum value of the total of the martensite and retained austenite at each divided region of the sheet thickness direction to 3.0 times or less of the average value, variation of the martensite and retained austenite in the sheet thickness direction is suppressed, i.e., regions where these structures are locally present in large amounts are reduced. As a result, the LC difference of the ultimate deformability can be reliably and sufficiently reduced. From the viewpoint of reducing the LC difference of the ultimate deformability, the smaller the variation of martensite and retained austenite in the sheet thickness direction, the more preferable. Therefore, for example, the maximum value of the total of the martensite and retained austenite in each divided region in the sheet thickness direction may also be 2.8 times or less, 2.5 times or less, 2.2 times or less, 2.0 times or less, or 1.8 times or less of the average value of the total. The lower limit is not particularly prescribed, but, for example, the maximum value of the total of the martensite and retained austenite in each divided region in the sheet thickness direction may also be 1.0 time or more and 1.1 times or more the average value of the total.

[Measurement of Ratio of Maximum Value of Total of Martensite and Retained Austenite in Sheet Thickness Direction and Average Value of Total]

The ratio of the maximum value of the total of the martensite and retained austenite in the sheet thickness direction and the average value of the total is determined as explained below. First, in the total $2.0\times10^{-9}$m$^2$ or more area (observed field) explained in relation to the identification of the steel structure and calculation of the area ratio, the observed field is divided in the sheet thickness direction at 2 $\mu$m intervals and the total area ratio of the martensite and retained austenite in each divided region was calculated. Next, the value of the highest value among the total area ratios of the martensite and retained austenite of the divided regions calculated divided by the average value of the total area ratio of the martensite and retained austenite of the divided regions calculated is determined as the ratio of the maximum value of the total of the martensite and retained austenite in the sheet thickness direction and the average value of the total.

[Preferable Embodiment]

In a preferable embodiment of the present invention, the Si content of the hot rolled steel sheet is 0.001 to 0.500% and the number density of recessed parts with depths of more than 5 $\mu$m present at the surface of the hot rolled steel sheet is controlled to 1.0/mm or less per surface length. By limiting the Si content to 0.500% or less, it is possible to suppress the formation of Si scale. In addition to this, as explained in detail later in relation to the method of production of the hot rolled steel sheet, by suitably controlling the descaling before finish rolling, it becomes possible to obtain a hot rolled steel sheet having excellent surface properties, more specifically a hot rolled steel sheet with the number density of recessed parts with depths of more than 5 $\mu$m present at the surface controlled to 1.0/mm or less per surface length. Recessed parts with depths of more than 5 $\mu$m can act as stress concentration parts, and therefore by controlling the number density of the recessed parts to 1.0/mm or less so as to realize flatter surface properties, it becomes possible to more remarkably reduce the LC difference of the ultimate deformability. From the viewpoint of reducing the LC difference of the ultimate deformability, the smaller the number density of the recessed parts with depths of more than 5 $\mu$m present at the surface of the hot rolled steel sheet, the more preferable. For example, it may be 0.8/mm or less, 0.5/mm or less, or 0.3/mm or less. The lower limit may be 0/mm. While not particularly limited, for example, the number density of the recessed parts with depths of more than 5 $\mu$m present at the surface of the hot rolled steel sheet may also be 0.1/mm or more.

[Measurement of Number Density of Recessed Parts With Depths of More Than 5 $\mu$m Present at Surface of Hot Rolled Steel Sheet]

The number density of recessed parts with depths of more than 5 $\mu$m present at the surface of the hot rolled steel sheet is measured as follows. First, a sample is taken at the sheet thickness cross-section parallel to the rolling direction of the hot rolled steel sheet using the sheet thickness cross-section at the center position in the width direction as the observed surface. The observed surface was machine polished to finish it to a mirror surface, then an FE-SEM was used to capture the reflected electron image of the steel sheet surface by a capturing power of 500X (if a hot rolled steel sheet has plating layer, plating/steel sheet interface). The obtained reflected electron image is digitalized to clarify the surface of the steel sheet. The converted digital image is converted to numerical data to obtain the height profile of the surface. As image analysis software where such an operation is possible, for example, there is Image J, etc. The center line is found from the height profile by the least square method. A region with a surface height more than 5 $\mu$m separated from the center line to the minus side is made a "recessed part with a depth of more than 5 $\mu$m". A similar analysis is performed so that the measurement range in the X direction (rolling direction) exceeded a total of 1 mm. For example, if the size in the X direction (rolling direction) at one field is 200 $\mu$m, the field is changed and the above analysis is performed at least five times. The numbers of "recessed parts with depths of more than 5 $\mu$m" obtained at the different fields are totaled up and the result converted to the number density per 100 $\mu$m of the surface length. This is determined as the "number density of recessed parts with depths of more than 5 $\mu$m present at the surface of the hot rolled steel sheet". Here, the "surface length" means the length along the height profile of the surface explained above and can be measured using image analysis software. As the means for measuring the height profile of a steel sheet, a contact type or laser type roughness meter is general, but if the hot rolled steel sheet has a plating layer, first, the plating layer has to be dissolved and peeled off by acid. However, with such a method, at the time of dissolution by acid, not only is it feared that the plating layer, but also the base iron interface is simultaneously corroded and the profile changes from the original asperities. For this reason, these means are not recommended.

[Sheet Thickness]

The hot rolled steel sheet according to an embodiment of the present invention is not particularly limited, but in general has a sheet thickness of 1.0 to 8.0 mm. For example, the sheet thickness may be 1.2 mm or more, 1.6 mm or more, or 2.0 mm or more and/or may be 7.0 mm or less, 6.0 mm or less, 5.0 mm or less, or 4.0 mm or less.

[Plating Layer]

The hot rolled steel sheet according to an embodiment of the present invention may be a plated steel sheet provided with a plating layer on at least one surface, preferably at both surfaces. The plating layer is not particularly limited, but, for example, may also be an electrogalvanized layer, hot dip galvanized layer, or hot dip galvannealed layer. These galvanized layers may have any compositions known to persons skilled in the art and may include Al, Mg, or other additional elements in addition to Zn. Further, the amount of deposition of the plating layer is not particularly limited and may be a general amount of deposition.

[Mechanical Properties]

[Tensile Strength (TS) and Total Elongation (EL)]

According to the hot rolled steel sheet having the above chemical composition and metallostructure, it is possible to achieve a high tensile strength, specifically a 780 MPa or more tensile strength (TS). The tensile strength is preferably 800 MPa or more, 820 MPa or more, or 840 MPa or more. According to the hot rolled steel sheet according to an embodiment of the present invention, despite having such an extremely high tensile strength, by the specific combination of the chemical composition and metallostructure explained above, it is possible to realize improvement of the hole expandability and reduction of the LC difference of the uniform elongation and ultimate deformability. The upper limit of the tensile strength is not particularly prescribed, but, for example, the tensile strength of the hot rolled steel sheet may also be 1180 MPa or less, 1080 MPa or less, or 1000 MPa or less. Further, according to the hot rolled steel sheet according to an embodiment of the present invention, it is possible to achieve a high ductility, more specifically it is possible to achieve a 10.0% or more, preferably 12.0% or more, more preferably 14.0% or more or 16.0% or more total elongation (EL). The upper limit of the total elongation is not particularly prescribed, but, for example, the total elongation of the hot rolled steel sheet may also be 40.0% or less or 30.0% or less. The tensile strength and total elongation are determined by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. For the TS and EL in the present invention, the values at the time of performing the tensile test in the C direction are employed. The reason for performing the tensile test in the L direction is for evaluating the LC difference of uniform elongation ($uELC/uEL_L$) and the LC difference of the ultimate deformability ($\varepsilon_C/\varepsilon_L$).

[Hole Expansion Ratio ($\lambda$)]

According to the hot rolled steel sheet having the above chemical composition and metallostructure, it is possible to achieve a high hole expandability, specifically a 50% or more hole expansion ratio ($\lambda$). The hole expansion ratio is preferably 55% or more, more preferably 60% or more or 70% or more. The upper limit of the hole expansion ratio is not particularly prescribed, but, for example, the hole expansion ratio may also be 130% or less, 120% or less, or 100% or less. The hole expansion ratio is measured by conducting a "JFS T 1001 hole expansion test method" of the Japan Iron and Steel Federation standard.

[LC Difference of Uniform Elongation ($uEL_C/uEL_L$)]

According to the hot rolled steel sheet having the above chemical composition and metallostructure, it is possible to realize a remarkable reduction of the LC difference of uniform elongation ($uEL_C/uEL_L$), for example, it is possible to achieve a 0.80 to 1.20, preferably 0.90 to 1.10 $uELC/uEL_L$. The $uELC/uEL_L$ is determined by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. More specifically, the value of the uniform elongation of the C direction obtained ($uEL_C$) divided by the uniform elongation of the L direction ($uEL_L$) is determined as the LC difference of uniform elongation ($uEL_C/uEL_L$).

[LC Difference of Ultimate Deformability ($\varepsilon_C/\varepsilon_L$)]

According to the hot rolled steel sheet having the above chemical composition and metallostructure, it is possible to remarkably reduce the LC difference ($\varepsilon_C/\varepsilon_L$) at the ultimate deformability, for example, it becomes possible to reach a 0.70 to 1.30, preferably 0.80 to 1.20, more preferably 0.90 to 1.10 $\varepsilon_C/\varepsilon_L$. The $\varepsilon_C/\varepsilon_L$ is determined by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. More specifically, the ultimate deformability is calculated by measuring the initial sheet thickness ($t_0$) of the parallel part before the tensile test and the sheet thickness ($t_f$) of the fractured part after the tensile test for each of the L direction test piece and C direction test piece and entering them into the following formula:

[Mathematical 1]

$$\varepsilon = \ln\left(\frac{t_0}{t_f}\right)$$

Next, the value of the ultimate deformability ($\varepsilon_C$) of the C direction obtained divided by the ultimate deformability ($\varepsilon_L$) of the L direction is determined as the LC difference of the ultimate deformability ($\varepsilon_C/\varepsilon_L$).

The hot rolled steel sheet according to an embodiment of the present invention, as explained above, despite being high strength, for example, a high strength of a tensile strength of 780 MPa or more, can improve the hole expandability and realize a reduction of the LC difference of the uniform elongation and ultimate deformability. For this reason, the hot rolled steel sheet according to an embodiment of the present invention can reliably achieve both the contradictory properties of high strength and excellent formability, and therefore is particularly useful for use in parts, etc., in a technical field where both of these properties are sought. In a preferred embodiment, auto parts including the hot rolled steel sheet according to an embodiment of the present invention, in particular parts selected from the suspension, chassis, wheels, etc., of automobiles are provided. These auto parts may include the hot rolled steel sheet according to an embodiment of the present invention in at least part. Therefore, in at least some of these parts, the features of the chemical composition, metallostructure, and/or surface properties explained before are satisfied. At portions of the hot rolled steel sheet not directly contacting the dies in press forming or other shaping and with relatively low degrees of working, the features of the metallostructure and/or surface properties do not particularly change before and after shaping.

<Method of Production of Hot Rolled Steel Sheet>

Next, a preferable method of production of the hot rolled steel sheet according to an embodiment of the present invention will be explained. The following explanation is intended to illustrate the characteristic method for production of the hot rolled steel sheet according to an embodiment of the present invention and is not intended to limit the hot rolled steel sheet to one produced by the method of production explained below.

The method of production of the hot rolled steel sheet according to an embodiment of the present invention comprises

(A) continuously casting of casting a slab having a chemical composition explained above in relation to the hot rolled steel sheet so as to satisfy the following formulas (1) to (3),

[Mathematical 2]

$$\sum_{\tau=0}^{\tau_1} f_L \cdot (1 - f_L) \cdot (M_L - M_\delta) \sqrt{D_\delta^{Mn}(T_c(\tau))} < 1.00 \qquad \cdots \quad (1)$$

[Mathematical 3]

$$T_c(\tau) = T_L - \{T_L - T_s(\tau)\} \cdot (\tau/24000) \qquad \cdots \quad (2)$$

[Mathematical 4]

$$3.0 < \sum_{\tau=\tau_1}^{\tau_2} \sqrt{D_\delta^{Mn}(T_c(\tau))} \qquad \cdots \quad (3)$$

$\tau$: elapsed time from start of casting [s]

$\tau_1$ : time when TC ($\tau$) reaches $T_\delta$ [s]

$\tau_2$ : time when TC ($\tau$) reaches 1673K [s]

$T_S$ ($\tau$): slab surface temperature at time $\tau$ [K]

TC ($\tau$): estimated slab inside temperature at time $\tau$ [K]

$T_L$ : solidification start temperature [K]

$T_\delta$ : solidification end temperature [K]

$f_L$ : equilibrium volume fraction of liquid phase at temperature TC ($\tau$)

$M_L$ : equilibrium Mn concentration of liquid phase at temperature TC ($\tau$)

$M_\delta$ : equilibrium Mn concentration of $\delta$ at temperature $T_C$ ($\tau$)

$D_\delta^{Mn}$ : Mn dispersion coefficient in $\delta$ phase at temperature TC ($\tau$) [m$^2$ /s]

(B) hot rolling including heating the cast slab, then rough rolling and finish rolling it and satisfying the following conditions (B1) to (B3), and

(B1) the heating temperature of the slab is 1200°C or more,

(B2) the rough rolling includes three or more rolling passes with a steel sheet temperature of 1000°C or more and a rolling reduction of more than 20%, and

(B3) the finish rolling is performed using a tandem rolling machine comprised of at least five rolling stands, an entry side temperature of two passes before the last is 950°C or more, an exit side temperature of the last pass is 900°C or more, a rolling reduction of each pass at the last three passes is 25% or less, a time between the rolling passes at the last three passes is 0.2 to 1.0 second, a cumulative rolling reduction of the last three passes is 35 to 55%, and a time from the last pass to the start of cooling is 1.0 to 3.0 seconds,

(C) cooling including primary cooling the finish rolled steel sheet by an average cooling speed of 20°C/s or more down to a cooling stop temperature of 600 to 750°C and air-cooling it for 3 to 20 seconds, then secondary cooling by an average cooling speed of 20°C/s or more down to a coiling temperature of 200°C or less and coiling it. Below, each step will be explained in detail.

[(A) Continuous Casting Step]

First, a slab having the chemical composition explained above in relation to the hot rolled steel sheet is cast so as to satisfy the following formulas (1) to (3) in the continuous casting step:
[Mathematical 5]

$$\sum_{\tau=0}^{\tau_1} f_L \cdot (1 - f_L) \cdot (M_L - M_\delta) \sqrt{D_\delta^{Mn}(T_c(\tau))} < 1.00 \qquad \cdots \ (1)$$

[Mathematical 6]

$$T_c(\tau) = T_L - \{T_L - T_s(\tau)\} \cdot (\tau/24000) \qquad \cdots \ (2)$$

[Mathematical 7]

$$3.0 < \sum_{\tau=\tau_1}^{\tau_2} \sqrt{D_\delta^{Mn}(T_c(\tau))} \qquad \cdots \ (3)$$

$\tau$: elapsed time from start of casting [s]
$\tau_1$: time when $T_C(\tau)$ reaches $T_\delta$ [s]
$\tau_2$: time when $T_C(\tau)$ reaches 1673K [s]
$T_S(\tau)$: slab surface temperature at time $\tau$ [K]
$T_C(\tau)$: estimated slab inside temperature at time $\tau$ [K]
$T_L$: solidification start temperature [K]
$T_\delta$: solidification end temperature [K]
$f_L$: equilibrium volume fraction of liquid phase at temperature $T_C(\tau)$
$M_L$: equilibrium Mn concentration of liquid phase at temperature $T_C(\tau)$
$M_\delta$: equilibrium Mn concentration of $\delta$ at temperature $T_C(\tau)$
$D_\delta^{Mn}$: Mn dispersion coefficient in $\delta$ phase at temperature $T_C(\tau)$ [m$^2$/s]

If continuously casting a slab from molten steel, the molten steel is initially a liquid, but gradually solidifies from the surface and completely solidifies at a certain temperature (i.e., solidification end temperature). In relation to this, formula (1) prescribes the temperature region where the liquid phase and solid phase are copresent before the molten steel completely solidifies (temperature region at partially solidified state). At this temperature region, along with the progress in solidification from the surface of the molten steel, the Mn and other alloy elements spread (are ejected) from the solid phase to the liquid phase, and therefore Mn becomes concentrated in the liquid phase at that stage. Such concentration of Mn can cause Mn segregation, and therefore becomes a cause of variation in the martensite and retained austenite formed in the cooling step in the sheet thickness direction. More specifically, if a lot of Mn spreads from the solid phase to the liquid phase, a region with a high Mn concentration is locally formed. In such a region, martensite and retained austenite are easily formed, and therefore local formation of martensite and retained austenite is caused. Therefore, in the temperature region where the liquid phase and solid phase are copresent at the time of continuous casting, it becomes extremely important to sufficiently suppress the spread of Mn from the solid phase to the liquid phase. In relation to this, the inventors discovered that by satisfying the formulas (1) and (2), in particular by controlling the value found by the left side of formula (1) to less than 1.00, such a spread of Mn is suppressed and that, by combination with formula (3) explained later, Mn segregation is sufficiently suppressed and thereby variation of the martensite and retained austenite formed at the subsequent cooling step in the sheet thickness direction can be reduced.

Here, in formula (1), $\tau$=0 means the casting start, while $\tau_1$ means the time (s) when the inside temperature of the slab reaches the solidification end temperature $T_\delta$. For this reason, formula (1) can be understood as integration of the spread of Mn from the solid phase to the liquid phase by the time. Therefore, the smaller the value of the left side of formula (1), the more spread of Mn from the solid phase to the liquid phase is suppressed. From the viewpoint of suppression of the variation of the martensite and retained austenite in the sheet thickness direction, the smaller the value of the left side of formula (1), the more preferable. Specifically, 0.80 or less is preferable. $f_L$, $M_L$, $M_\delta$, and $D_\delta{}^{Mn}$ in formulas (1) and (2) are values determined by the temperature and the chemical composition of the molten steel. $T_C(\tau)$ is the inside temperature of the slab at the time $\tau$ and is estimated from the surface temperature of the slab by formula (2). Therefore, a person skilled in the art can suitably select the chemical composition of the molten steel and the temperature history at the time of continuous casting so as to control the value calculated by the left side of formula (1) to within the desired range. The step interval of the left side $\tau$ of formula (1) is 1 second. $T_L$, $T_\delta$, $f_L$, $M_L$, and $M_\delta$ can, for example, be found by phase diagram calculation of the steel composition covered using the commercially available thermodynamic calculation software "Thermo-Calc 2022b" (Thermo-Calc Software Inc.) The phase covered by the calculation is made LIQUID, BCC_A2. An equilibrium calculation is performed by the single axis mode using temperature as a variable. For the range of calculation temperature, the temperature range where the number of moles of the liquid phase becomes 0 to 1 may be included. For example, the range may be 1400 to 1600°C. The number of steps divided into is made 100, and the Step Method is made Normal. The pressure is made 100000 Pa, the size of the system is made 1Mol, and global minimization is deemed performed. After calculation, the values of the Mn concentration in the LIQUID phase and the Mn concentration in the BCC_A2 phase output as variables of the temperature are made $M_L$, $M_\delta$ at the different temperatures. The volumes of the LIQUID phase and BCC_A2 phase are output as variables of the temperature and the value of the volume of the LIQUID phase divided by the sum of the volumes of the LIQUID phase and BCC_A2 phase is made the $f_L$ at the different temperatures. The number of moles of the LIQUID phase is output, the lowest temperature at which the number of moles becomes 1 is made $T_L$, and the highest temperature at which the number of moles becomes 0 is made $T_\delta$. Further, $D_\delta{}^{Mn}$ is calculated by the following formula (4):.

[Mathematical 8]

$$D_\delta^{Mn} = 7.6 \cdot 10^{-5} \cdot exp\left(\frac{-53640}{8.314 \cdot T_C(\tau)}\right) \qquad \cdot \cdot \cdot \ (4)$$

On the other hand, formula (3) prescribes the dispersion of Mn after the molten steel completely solidifies. After the molten steel completely solidifies, to suppress Mn segregation, it becomes important to promote dispersion of Mn in the solid phase to make the Mn uniformly spread in the slab. Therefore, the inventors focused on the $\delta$ phase with the fast dispersion speed of Mn. More specifically, the inventors discovered that by limiting the C content in the steel to 0.080% or less to give a single $\delta$ phase at the time of solidification ($\delta$ solidification), then satisfying formula (3), it is possible to sufficiently suppress Mn segregation. If the C content in the steel becomes more than 0.080%, at the time of solidification from the liquid phase, a peritectic reaction occurs where the $\delta$ phase and austenite ($\gamma$) phase are simultaneously formed without going through a single $\delta$ phase state. As a result, dispersion of Mn can no longer be sufficiently promoted. That is to say, if the $\delta$ phase and the $\gamma$ phase are simultaneously formed, the Mn spreads between these two phases and rather than the spread of Mn being made uniform, localization of Mn is aided. Therefore, in the continuous casting step, in addition to satisfying formulas (1) to (3), it is important that the C content in the steel be controlled to 0.080% or less. Here, formula (3) can be understood as the integration of the dispersion of Mn from the time $\tau_1$ when the inside temperature of the slab reaches the solidification end temperature $T_\delta$ to the time $\tau_2$ reaches 1673K by the time. Therefore, the larger the value of the right side of formula (3), the more dispersion of Mn is promoted. In the present method of production, by controlling the value of the right side of formula (3) to more than 3.0, preferably 4.0 or more, it is possible to sufficiently promote the dispersion of Mn in the $\delta$ phase to suppress Mn segregation and thereby reliably reduce the variation of the martensite and retained austenite formed in the cooling step in the sheet thickness direction. Regarding formula (3) as well, in the same way as the case of formula (1), by suitably selecting the chemical composition of the molten steel and the temperature history at the time of continuous casting, it is possible to control the value calculated by the right side of formula (3) to within the desired range.

[(B) Hot Rolling Step]

The cast slab is heated then rough rolled and finish rolled at the next hot rolling step. The heating, rough rolling, and finish rolling of the slab have to satisfy the following conditions (B1) to (B3).

(B1) the heating temperature of the slab is 1200°C or more,
(B2) the rough rolling includes three or more rolling passes with steel sheet temperatures of 1000°C or more and rolling reductions of more than 20%, and
(B3) the finish rolling is performed using a tandem rolling machine comprised of at least five rolling stands, the entry side temperature of two passes before the last is 950°C or more, the exit side temperature of the last pass is 900°C or more, the rolling reduction of each rolling pass at the last three passes is 25% or less, the time between the rolling passes at the last three passes is 0.2 to 1.0 second, the cumulative rolling reduction of the last three passes is 35 to 55%, and the time from the last pass to the start of cooling is 1.0 to 3.0 seconds.

[(B1) Heating Temperature of Slab: 1200°C or More]

The slab used contains a relatively large amount of alloy elements. In particular, a slab after continuous casting contains coarse Ti carbides. For this reason, the alloy elements have to be dissolved in the slab. In particular, Ti has to be made to sufficiently dissolve. If the Ti does not sufficiently dissolve at the time of slab heating, at the cooling step, etc., after the hot rolling step, it becomes difficult to make Ti finely precipitate as carbides in the steel to increase the strength of the steel by precipitation hardening. Therefore, to make the Ti sufficiently solubilize, the heating temperature of the slab has to be made 1200°C or more. The upper limit is not particularly prescribed, but if the heating temperature of the slab is too high, the yield falls due to descaling. For this reason, the heating temperature of the slab is preferably 1300°C or less.

[(B2) Rough Rolling: Rolling by Steel Sheet Temperature of 1000°C or More and Rolling Reduction of More than 20% Three Times or More]

In the rough rolling, by performing rolling under a relatively high temperature of the steel sheet temperature of 1000°C or more and a relatively high rate of a rolling reduction of more than 20% for three times or more, it is possible to repeat rolling and recrystallization and becomes possible to use such operations to further promote the dispersion of Mn. As a result, segregation of Mn is sufficiently suppressed, and therefore it is possible to reduce the variation of the martensite and retained austenite contained in the steel structure of the finally obtained hot rolled steel sheet in the sheet thickness direction, more specifically to divide the observed field of the steel structure in the sheet thickness direction at 2 $\mu$m intervals and, when measuring the total of the martensite and retained austenite in each divided region, control the maximum value of the total to 3.0 times or less the average value of the total. If rolling by a steel sheet temperature of 1000°C or more and a rolling reduction of more than 20% two times or less, it is not possible to control the maximum value of the total of the martensite and retained austenite in each divided region in the sheet thickness direction to 3.0 times or less of the average value of the total and as a result becomes no longer possible to sufficiently reduce the LC difference of the ultimate deformability. The upper limit of the times of rolling is not particularly prescribed, but, for example, rolling with a steel sheet temperature of 1000°C or more and a rolling reduction of more than 20% may also be performed 10 times or less or 8 times or less.

[Descaling]

In a preferable embodiment of the present method of production, descaling is performed after rough rolling and right before finish rolling under predetermined conditions. More specifically, in addition to limiting the Si content in the steel to 0.500% or less, descaling is performed after rough rolling and within 5.0 seconds before the start of finish rolling under conditions of a steel sheet temperature of 1000°C or more and a water pressure of 8 MPa or more. By performing descaling under such conditions, it becomes possible to obtain a hot rolled steel sheet having excellent surface properties, more specifically possible to obtain a hot rolled steel sheet controlled to a number density of recessed parts with a depth of more than 5 $\mu$m present at the surface of 1.0/mm or less per surface length. In order for the recessed parts with a depth of more than 5 $\mu$m to be able to act as stress concentration parts, it is possible to control the number density of such recessed parts to 1.0/mm or less to realize flatter surface properties and thereby more remarkably reduce the LC difference of the ultimate deformability.

Explained more specifically, in a steel sheet containing a relatively large amount of Si, Si oxides are formed at the interface of the Fe oxides (also called "scale") formed at the steel sheet surface at the time of the hot rolling step and the steel. The Si oxides cause the Fe oxides to be strongly attached to the steel, and therefore sometimes the scale cannot be sufficiently removed even by subsequent descaling using high pressure water, etc. If scale not sufficiently removed is pressed into the steel sheet surface due to the subsequent finish rolling, asperities are formed at the steel sheet surface and the number density of the recessed parts with depths of more than 5 $\mu$m can no longer be controlled to 1.0/mm or less per surface length. Therefore, in a preferred embodiment of the present method of production, first, the Si content in the steel is limited to 0.500% or less to suppress the formation of Si oxides at the interface of the scale and steel sheet and keep the scale and steel sheet from being strongly adhered. Next, descaling is performed at a high temperature of a steel sheet temperature of 1000°C or more and a relatively high water pressure of 8 MPa or more so as to enable sufficient removal of the scale of the steel sheet surface. By performing such descaling right before the finish rolling, i.e., within 5.0 seconds before the start of finish rolling, it is possible to suppress scale growth from descaling to finish rolling, and therefore it is possible to reliably avoid scale being pressed in the steel sheet surface at the subsequent finish rolling. If any one requirement of the steel sheet temperature of 1000°C or more, water pressure of 8 MPa or more, and descaling within 5.0 seconds before the start of finish rolling is not satisfied, the scale is insufficiently removed and sometimes the desired surface properties cannot be achieved. The upper limit of the steel sheet temperature is not particularly prescribed, but, for example, the steel sheet temperature may also be 1150°C or less. Similarly, the upper limit of the descaling is not particularly prescribed, but, for example, the water pressure may also be 20 MPa or less.

[(B3) Finish Rolling]

After rough rolling or after performing predetermined descaling in addition to rough rolling, the steel sheet is finish rolled. Specifically, the finish rolling is performed using a tandem rolling machine comprised of at least five rolling stands under conditions of an entry side temperature of two passes before last of 950°C or more, an exit side temperature of the last pass of 900°C or more, a rolling reduction of each rolling pass in the last three passes of 25% or less, a time between rolling passes in the last three passes of 0.2 to 1.0 second, a cumulative rolling reduction of the last three passes of 35 to 55%, and a time from the last pass to the cooling start of 1.0 to 3.0 seconds. By performing finish rolling under such conditions, it becomes possible to make the recrystallization suitably progress to prevent accumulation of strain and thereby suppress control of the crystal orientation to a specific direction, i.e., becomes possible to reliably control the maximum pole density of the group of {100}<011>, {211}<011>, {311}<011>, {110}<011>, and {332}<113> orientations at the texture measured at the sheet thickness center part of the hot rolled steel sheet to 8.0 or less. In addition, by performing such finish rolling, it is possible to suppress excessive growth of recrystallized grains, and therefore it becomes possible to reliably suppress the ratio of the area which crystal grains having a size of more than 12 $\mu$m occupy with respect to the observed area of the steel structure to 50% or less. As a result, it becomes possible to improve the hole expandability and reduce the LC difference of uniform elongation.

For example, if the entry side temperature of two passes before the last is less than 950°C or the exit side temperature of the last pass is less than 900°C, recrystallization does not sufficiently proceed, and therefore strain is accumulated and sometimes the maximum pole density of the group of orientations cannot be controlled to 8.0 or less. Further, if the rolling reduction is more than 25% at even one of the rolling passes in the last three passes, sometimes similarly it is not possible to control the maximum pole density of the group of orientations to 8.0 or less due to the introduction of excessive strain. Further, if the time between rolling passes in the last three passes is less than 0.2 second or the time from the last pass to the start of cooling is less than 1.0, recrystallization does not sufficiently proceed, and therefore strain is accumulated and, similarly, it is not possible to control the maximum pole density of the group of orientations to 8.0 or less. On the other hand, if the time between the rolling passes in the last three passes becomes more than 1.0 second or the time from the last pass to the start of cooling becomes more than 3.0 seconds, recrystallized grains excessively grow and sometimes the ratio of the area which crystal grains having a size of more than 12 $\mu$m occupy with respect to the observed area of the steel structure cannot be controlled to 50% or less. Further, if the cumulative rolling reduction of the last three passes is less than 35%, recrystallization does not proceed, and therefore the crystal grains do not sufficiently recrystallize and sometimes the ratio of the area which crystal grains having a size of more than 12 $\mu$m occupy with respect to the observed area of the steel structure cannot be controlled to 50% or less. Further, if the cumulative rolling reduction of the last three passes is more than 55%, due to introduction of excessive strain, similarly sometimes it is not possible control the maximum pole density of the group of orientations to 8.0 or less. The cumulative rolling reduction of the last three passes preferably 50% or less. Here, the cumulative rolling reduction of the last three passes is calculated by the following formula:

Cumulative rolling reduction of last three passes (%)=(sheet thickness before last three passes-sheet thickness after last three passes)/sheet thickness before last three passes$\times$100

[(C) Cooling Step]

Finally, the finish rolled steel sheet is air-cooled in the next cooling step by an average cooling speed of 20°C/s or more down to the cooling stop temperature of 600 to 750°C over 3 to 20 seconds, then secondary cooled by an average cooling speed of 20°C/s or more down to the coiling temperature of 200°C or less and coiled. By performing a cooling step satisfying these conditions, it becomes possible to produce a hot rolled steel sheet having a steel structure comprised of, by area%, the total of the martensite and retained austenite: 2 to 30%, the total of the pearlite and cementite: 0 to 3%, and a balance: ferrite and bainite. In particular, by primary cooling down to the cooling stop temperature of 600 to 750°C, then air-cooling over 3 to 20 seconds, it is possible to promote the precipitation of Ti carbides. As a result, the effect of improvement of strength by precipitation hardening can be sufficiently manifested.

On the other hand, if the average cooling speed of the primary cooling is less than 20°C/s or the average cooling speed of the secondary cooling is less than 20°C/s, the pearlite or other structure excessively forms. In this case, the hole expandability or other properties fall. Further, if the air-cooling time is more than 20 seconds, martensite and other structures are not sufficiently formed and/or pearlite and other structures excessively form and in this case, the desired strength is not obtained and/or the hole expandability falls. Further, if air-cooling is not performed or the air-cooling time is less than 3 seconds, the steel sheet is cooled down to the coiling temperature of 200°C or less without substantially undergoing intermediate air cooling. For this reason, martensite and/or retained austenite excessively form and similarly the hole expandability and other properties fall. Further, if the coiling temperature becomes more than 200°C, martensite and other structures cannot be sufficiently formed. In this case, the desired strength can no longer be achieved.

The obtained hot rolled steel sheet may also be subjected to a later step such as a plating step for forming a plating layer on one or both surfaces of the hot rolled steel sheet. The plating step or other later step can be performed by an ordinary method.

According to the hot rolled steel sheet produced by the above method of production, despite having a predetermined chemical composition with a C content controlled to a 0.080 mass% or less relatively low range, precipitation hardening by Ti carbides is utilized and the steel structure is configured to include an area% of the total of the martensite and retained austenite of 2 to 30%, and therefore it is possible to achieve a high strength, for example, a high strength of a tensile strength of 780 MPa or more. Furthermore, the ratio of the area which crystal grains having a size of more than 12 μm occupy with respect to the observed area in the steel structure is limited to 50% or less and, in the texture measured at the sheet thickness center part of the hot rolled steel sheet, the maximum pole density of the group of {100}<011>, {211}<011>, {311}<011>, {110}<011>, and {332}<113> orientations is controlled to 8.0 or less, and therefore the hole expandability is improved and the LC difference of uniform elongation can be reduced. In addition, when dividing the observed field of the steel structure in the sheet thickness direction at 2 μm intervals and measuring the total of the martensite and retained austenite in each divided region, the maximum value of the total is controlled to 3.0 times or less of the average value of the total, and therefore the LC difference of the ultimate deformability can be reduced. Therefore, the hot rolled steel sheet produced by the method of production can reliably both the contradictory properties of high strength and excellent formability, and therefore it is particularly useful in use in the automobile field where realization of both of these properties is sought.

Below, examples will be used to explain the present invention in more detail, but the present invention is not limited to these examples in any way.

EXAMPLES

In the following examples, hot rolled steel sheets according to an embodiment of the present invention were produced under various conditions and the obtained hot rolled steel sheets were investigated for tensile strength (TS), total elongation (EL), hole expansion ratio ($\lambda$), LC difference of uniform elongation ($uEL_C/uEL_L$), and LC difference of the ultimate deformability ($\varepsilon_C/\varepsilon_L$).

First, molten steels were cast under the conditions shown in Table 2 by the continuous casting method to form slabs having the various chemical compositions shown in Table 1. These slabs were heated under the conditions shown in Table 2, then rough rolled, descaled, and finish rolled. The number of times of rough rolling shown in Table 2 shows the number of times of rolling with a steel sheet temperature of 1000°C or more and a rolling reduction of more than 20%. The finish rolling was performed using a tandem rolling machine comprised of five rolling stands. Finally, the finish rolled steel sheets were cooled and coiled under the conditions shown in Table 2 to obtain hot rolled steel sheets having 3.0 mm sheet thicknesses.

[Table 1-1]

Table 1-1

| Steel type | Chemical composition (mass%), balance: Fe and impurities | | | | | | | | | | | | | | |
| --- | --- | --- | --- | --- | --- | --- | --- | --- | --- | --- | --- | --- | --- | --- | --- |
| | C | Si | Mn | Ti | Al | P | S | N | O | Cr | Mo | Cu | Ni | Co | Nb |
| A | 0.052 | 0.127 | 1.543 | 0.102 | 0.287 | 0.019 | 0.0020 | 0.0030 | 0.0008 | | | | | | 0.036 |
| B | 0.078 | 0.030 | 1.892 | 0.085 | 0.453 | 0.024 | 0.0007 | 0.0018 | 0.0015 | | 0.16 | | | | 0.057 |
| C | 0.048 | 0.052 | 1.211 | 0.138 | 0.299 | 0.022 | 0.0010 | 0.0021 | 0.0008 | 0.27 | | | | | |
| D | 0.055 | 0.209 | 1.137 | 0.125 | 0.241 | 0.017 | 0.0007 | 0.0037 | 0.0018 | | | 0.31 | 0.17 | | |
| E | 0.075 | 0.221 | 1.889 | 0.189 | 0.268 | 0.009 | 0.0005 | 0.0026 | 0.0022 | | | | | | 0.029 |
| F | 0.032 | 0.468 | 1.894 | 0.126 | 0.212 | 0.006 | 0.0019 | 0.0038 | 0.0024 | | | | | 0.55 | |
| G | 0.070 | 0.015 | 1.606 | 0.083 | 0.359 | 0.007 | 0.0020 | 0.0038 | 0.0022 | | | | | | |
| H | 0.053 | 0.083 | 1.919 | 0.092 | 0.558 | 0.016 | 0.0004 | 0.0028 | 0.0022 | | | | | | |
| I | 0.056 | 0.022 | 1.660 | 0.138 | 0.315 | 0.006 | 0.0012 | 0.0034 | 0.0021 | | | | | | 0.007 |
| J | 0.051 | 0.937 | 1.475 | 0.113 | 0.340 | 0.011 | 0.0008 | 0.0024 | 0.0006 | | | | | | |
| K | 0.022 | 0.108 | 1.813 | 0.135 | 0.277 | 0.018 | 0.0010 | 0.0031 | 0.0023 | | | | | | |
| L | 0.106 | 0.067 | 1.414 | 0.101 | 0.336 | 0.025 | 0.0014 | 0.0037 | 0.0023 | | | | | | |
| M | 0.057 | 0.036 | 1.751 | 0.070 | 0.273 | 0.014 | 0.0011 | 0.0025 | 0.0025 | | | | | | |
| N | 0.060 | 0.116 | 1.649 | 0.241 | 0.252 | 0.010 | 0.0008 | 0.0043 | 0.0009 | | | | | | |
| O | 0.046 | 2.109 | 1.458 | 0.142 | 0.300 | 0.023 | 0.0022 | 0.0026 | 0.0023 | | | | | | |
| P | 0.050 | 0.089 | 0.735 | 0.120 | 0.404 | 0.018 | 0.0023 | 0.0029 | 0.0019 | | | | | | |
| Q | 0.069 | 0.023 | 2.421 | 0.113 | 0.325 | 0.009 | 0.0006 | 0.0031 | 0.0024 | | | | | | |
| R | 0.063 | 0.099 | 1.775 | 0.100 | 0.058 | 0.011 | 0.0013 | 0.0034 | 0.0010 | | | | | | |
| S | 0.054 | 0.024 | 1.827 | 0.138 | 1.120 | 0.006 | 0.0013 | 0.0041 | 0.0009 | | | | | | |
| Underlines indicate outside range of present invention. | | | | | | | | | | | | | | | |

[Table 1-2]

Table 1-2

| Steel type | Chemical composition (mass%), balance: Fe and impurities | | | | | | | | | | | | |
|---|---|---|---|---|---|---|---|---|---|---|---|---|---|
| | V | W | Sn | Sb | Zn | B | Ca | Mg | Zr | Bi | Hf | As | REM |
| A | | | | | | | | | | | | | |
| B | | | | | | | | | | | | | |
| C | | 0.25 | | | | | | | 0.0051 | | | | |
| D | | | | | | 0.0015 | | | | | | | |
| E | 0.13 | | | | | | 0.0030 | 0.0042 | | | | | |
| F | | | | | 0.11 | 0.0008 | | | | | | | |
| G | | | 0.27 | 0.06 | | | | | | | | | |
| H | | | | | | | | | | 0.0039 | | 0.0150 | |
| I | | | | | | | | | | | 0.0027 | | 0.0069 |
| J | | | | | | | | | | | | | |
| K | | | | | | | | | | | | | |
| L | | | | | | | | | | | | | |
| M | | | | | | | | | | | | | |
| N | | | | | | | | | | | | | |
| O | | | | | | | | | | | | | |
| P | | | | | | | | | | | | | |
| Q | | | | | | | | | | | | | |
| R | | | | | | | | | | | | | |
| S | | | | | | | | | | | | | |
| Underlines indicate outside range of present invention. | | | | | | | | | | | | | |

[Table 2]

Table 2

| Prod. no. | Steel type | (A) Continuous casting step | | (B) Hot rolling step | | | | | | | | | | | | | | (C) Cooling step | | | | | Remarks |
|---|---|---|---|---|---|---|---|---|---|---|---|---|---|---|---|---|---|---|---|---|---|---|---|
| | | Formula (1) left side | Formula (3) right side | Slab heating temp. | No. of rough rolling passes | Steel sheet temp. | Descaling water pressure | Time from descaling to finish rolling | Entry side temp. of two passes before last | Rolling reduction R1 of two passes before last | Time t1 from two passes before last to one pass before last | Rolling reduction R2 of one pass before last | Time t2 from one pass before last to last pass | Rolling reduction R3 of last pass | Time t3 from last pass to start of cooling | Cum. rolling reduction R of last three passes | Exit side temp. of last pass | Ave. cooling speed | Cooling stop temp. | Air-cooling time | Average cooling speed | Coiling temp. | |
| | | | | °C | times | °C | MPa | s | °C | % | s | % | s | % | s | % | °C | °C/s | °C | s | °C/s | °C | |
| 1 | A | 0.59 | 5.0 | 1241 | 5 | 1088 | 12 | 2.7 | 978 | 18 | 0.5 | 17 | 0.4 | 15 | 2.7 | 42 | 927 | 51 | 680 | 6 | 36 | 72 | Inv. ex. |
| 2 | A | 1.16 | 4.1 | 1248 | 5 | 1060 | 17 | 4.1 | 959 | 17 | 0.6 | 17 | 0.5 | 14 | 1.6 | 41 | 924 | 102 | 686 | 10 | 45 | 122 | Comp. ex. |
| 3 | A | 0.38 | 2.7 | 1223 | 5 | 1061 | 13 | 1.6 | 962 | 19 | 0.4 | 14 | 0.3 | 15 | 2.6 | 41 | 911 | 95 | 644 | 7 | 48 | 142 | Comp. ex. |
| 4 | A | 0.65 | 5.5 | 1256 | 4 | 1064 | 15 | 8.9 | 982 | 22 | 0.5 | 19 | 0.4 | 17 | 2.6 | 48 | 949 | 72 | 728 | 5 | 44 | 129 | Inv. ex. |
| 5 | A | 0.55 | 6.3 | 1250 | 4 | 983 | 14 | 1.8 | 960 | 18 | 0.5 | 17 | 0.4 | 16 | 2.2 | 43 | 913 | 69 | 661 | 6 | 52 | 108 | Inv. ex. |
| 6 | A | 0.58 | 4.4 | 1242 | 4 | 1075 | 5 | 2.2 | 977 | 19 | 0.4 | 16 | 0.4 | 15 | 2.0 | 42 | 929 | 78 | 667 | 6 | 50 | 123 | Inv. ex. |
| 7 | A | 0.71 | 4.8 | 1273 | 2 | 1064 | 11 | 1.0 | 971 | 20 | 0.4 | 20 | 0.4 | 18 | 2.3 | 48 | 917 | 106 | 710 | 9 | 34 | 147 | Comp. ex. |
| 8 | A | 0.57 | 5.2 | 1218 | 5 | 1079 | 9 | 4.8 | 971 | 16 | 0.5 | 14 | 0.5 | 13 | 1.9 | 37 | 911 | 106 | 684 | 25 | 37 | 147 | Comp. ex. |
| 9 | A | 0.62 | 5.3 | 1242 | 4 | 1061 | 11 | 3.2 | 985 | 30 | 0.5 | 23 | 0.5 | 20 | 2.6 | 57 | 936 | 97 | 683 | 9 | 50 | 62 | Comp. ex. |
| 10 | A | 0.53 | 4.9 | 1228 | 5 | 1055 | 13 | 4.2 | 963 | 19 | 0.1 | 19 | 0.1 | 17 | 1.2 | 46 | 919 | 40 | 636 | 5 | 33 | 77 | Comp. ex. |
| 11 | A | 0.57 | 6.0 | 1253 | 5 | 1080 | 15 | 1.9 | 967 | 19 | 0.5 | 18 | 0.5 | 18 | 0.5 | 46 | 922 | 125 | 679 | 7 | 46 | 93 | Comp. ex. |
| 12 | A | 0.50 | 5.3 | 1244 | 7 | 1076 | 12 | 2.3 | 970 | 13 | 0.6 | 10 | 0.5 | 9 | 2.1 | 29 | 950 | 98 | 699 | 8 | 53 | 100 | Comp. ex. |
| 13 | A | 0.44 | 4.0 | 1272 | 4 | 1079 | 10 | 2.9 | 925 | 19 | 0.3 | 15 | 0.3 | 15 | 2.7 | 41 | 887 | 55 | 673 | 5 | 45 | 62 | Comp. ex. |
| 14 | A | 0.60 | 6.2 | 1258 | 5 | 1090 | 12 | 3.0 | 971 | 17 | 0.5 | 13 | 0.4 | 13 | 2.5 | 37 | 941 | 14 | 647 | 11 | 30 | 75 | Comp. ex. |
| 15 | A | 0.51 | 5.6 | 1293 | 4 | 1062 | 17 | 3.7 | 962 | 21 | 0.7 | 15 | 0.5 | 16 | 2.3 | 44 | 909 | 70 | 698 | 11 | 8 | 66 | Comp. ex. |
| 16 | A | 0.68 | 5.8 | 1232 | 5 | 1072 | 13 | 3.2 | 964 | 18 | 0.5 | 17 | 0.5 | 15 | 2.0 | 42 | 930 | 86 | 647 | 5 | 61 | 359 | Comp. ex. |
| 17 | A | 0.88 | 6.8 | 1279 | 5 | 1079 | 15 | 0.9 | 970 | 18 | 0.6 | 15 | 0.5 | 15 | 1.8 | 41 | 944 | 64 | 662 | 6 | 58 | 127 | Inv. ex. |
| 18 | A | 0.50 | 3.3 | 1247 | 5 | 1082 | 12 | 1.6 | 995 | 19 | 0.5 | 17 | 0.4 | 16 | 2.4 | 44 | 947 | 82 | 644 | 10 | 40 | 108 | Inv. ex. |
| 19 | A | 0.48 | 4.6 | 1246 | 5 | 1091 | 16 | 1.5 | 985 | 23 | 0.4 | 23 | 0.4 | 20 | 2.0 | 53 | 952 | 85 | 661 | 8 | 53 | 149 | Inv. ex. |
| 20 | B | 0.52 | 4.3 | 1257 | 6 | 1080 | 13 | 1.7 | 986 | 21 | 0.5 | 18 | 0.4 | 18 | 1.9 | 47 | 924 | 79 | 700 | 6 | 41 | 109 | Inv. ex. |
| 21 | B | 0.54 | 5.2 | 1287 | 5 | 1070 | 12 | 2.4 | 984 | 19 | 0.3 | 19 | 0.3 | 17 | 2.0 | 46 | 945 | 113 | 636 | 2 | 52 | 115 | Comp. ex. |
| 22 | B | 0.60 | 5.9 | 1281 | 4 | 1091 | 9 | 1.9 | 990 | 17 | 0.8 | 15 | 0.7 | 12 | 1.3 | 38 | 945 | 96 | 558 | - | 42 | 139 | Comp. ex. |
| 23 | B | 0.52 | 5.1 | 1294 | 5 | 1074 | 15 | 2.9 | 990 | 17 | 0.6 | 15 | 0.6 | 13 | 1.4 | 39 | 937 | 93 | 816 | - | 67 | 131 | Comp. ex. |
| 24 | C | 0.36 | 4.6 | 1289 | 5 | 1086 | 10 | 1.7 | 962 | 20 | 0.4 | 15 | 0.4 | 16 | 2.5 | 43 | 901 | 51 | 706 | 7 | 30 | 71 | Inv. ex. |
| 25 | D | 0.91 | 6.2 | 1269 | 5 | 1076 | 16 | 4.6 | 985 | 21 | 0.3 | 18 | 0.3 | 19 | 1.2 | 48 | 923 | 109 | 654 | 16 | 39 | 84 | Inv. ex. |
| 26 | E | 0.74 | 6.0 | 1246 | 4 | 1055 | 15 | 2.5 | 984 | 19 | 0.8 | 13 | 0.7 | 15 | 1.3 | 40 | 953 | 74 | 717 | 12 | 44 | 116 | Inv. ex. |
| 27 | F | 0.42 | 3.5 | 1280 | 5 | 1088 | 16 | 1.7 | 971 | 19 | 0.5 | 19 | 0.4 | 13 | 2.5 | 43 | 918 | 74 | 658 | 8 | 36 | 144 | Inv. ex. |
| 28 | F | 0.76 | 3.8 | 1253 | 5 | 1007 | 9 | 4.5 | 956 | 20 | 0.5 | 20 | 0.5 | 12 | 1.8 | 44 | 902 | 80 | 685 | 7 | 53 | 52 | Inv. ex. |
| 29 | G | 0.52 | 4.9 | 1268 | 5 | 1074 | 15 | 4.4 | 970 | 19 | 0.4 | 13 | 0.4 | 13 | 1.4 | 39 | 921 | 57 | 666 | 5 | 33 | 63 | Inv. ex. |
| 30 | G | 0.36 | 4.1 | 1266 | 4 | 1072 | 17 | 1.5 | 977 | 22 | 0.3 | 15 | 0.3 | 16 | 2.6 | 44 | 914 | 97 | 659 | 8 | 40 | 66 | Inv. ex. |
| 31 | I | 0.32 | 4.4 | 1252 | 3 | 1068 | 11 | 4.7 | 958 | 23 | 0.6 | 17 | 0.6 | 19 | 2.2 | 48 | 920 | 45 | 646 | 11 | 32 | 101 | Inv. ex. |
| 32 | J | 0.63 | 5.5 | 1243 | 5 | 1080 | 14 | 1.8 | 972 | 20 | 0.5 | 16 | 0.4 | 14 | 1.7 | 42 | 930 | 62 | 670 | 9 | 61 | 69 | Inv. ex. |
| 33 | K | 0.50 | 4.8 | 1214 | 5 | 1062 | 16 | 2.2 | 977 | 20 | 0.4 | 14 | 0.3 | 20 | 2.6 | 45 | 938 | 58 | 708 | 6 | 33 | 81 | Comp. ex. |
| 34 | L | 0.47 | - | 1265 | 4 | 1086 | 16 | 1.1 | 961 | 22 | 0.6 | 16 | 0.5 | 11 | 1.2 | 42 | 907 | 73 | 656 | 10 | 32 | 135 | Comp. ex. |
| 35 | M | 0.49 | 5.2 | 1213 | 4 | 1083 | 17 | 3.7 | 963 | 17 | 0.7 | 17 | 0.7 | 12 | 1.3 | 39 | 931 | 71 | 664 | 10 | 32 | 90 | Comp. ex. |
| 36 | N | 0.51 | 4.5 | 1290 | 5 | 1089 | 10 | 0.7 | 977 | 18 | 0.8 | 14 | 0.7 | 10 | 1.9 | 37 | 915 | 72 | 721 | 9 | 49 | 130 | Comp. ex. |
| 37 | O | 0.32 | 4.3 | 1285 | 6 | 1079 | 9 | 2.8 | 958 | 13 | 0.5 | 19 | 0.5 | 16 | 1.8 | 41 | 903 | 48 | 689 | 7 | 49 | 127 | Comp. ex. |
| 38 | P | 0.54 | 5.3 | 1283 | 5 | 1063 | 17 | 4.8 | 955 | 23 | 0.4 | 21 | 0.4 | 15 | 1.3 | 48 | 900 | 75 | 719 | 9 | 50 | 142 | Comp. ex. |
| 39 | Q | 0.50 | 4.7 | 1263 | 5 | 1070 | 14 | 1.2 | 973 | 22 | 0.4 | 15 | 0.4 | 16 | 1.9 | 44 | 924 | 84 | 679 | 5 | 30 | 127 | Comp. ex. |
| 40 | R | 0.70 | 5.8 | 1286 | 4 | 1084 | 13 | 2.1 | 975 | 18 | 0.4 | 17 | 0.4 | 20 | 1.9 | 46 | 937 | 90 | 665 | 5 | 39 | 77 | Comp. ex. |
| 41 | S | 0.44 | 4.9 | 1256 | 5 | 1068 | 12 | 0.9 | 966 | 19 | 0.5 | 16 | 0.5 | 16 | 1.8 | 43 | 928 | 110 | 682 | 8 | 61 | 97 | Comp. ex. |
| 42 | A | 0.45 | 6.7 | 1250 | 5 | 1073 | 15 | 2.0 | 992 | 16 | 0.8 | 15 | 1.0 | 10 | 2.7 | 36 | 960 | 23 | 642 | 13 | 57 | 151 | Inv. ex. |

Underlines indicate production conditions not preferable.

The properties of the obtained hot rolled steel sheets were measured and evaluated by the following methods.

[Tensile Strength (TS) and Total Elongation (El)]

The tensile strength (TS) and total elongation (El) were measured by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. More specifically, the lower of the values among the L direction TS and C direction TS obtained was determined as the tensile strength (TS) of the hot rolled steel sheet. Similarly, the lower of the values among the L direction EL and C direction EL obtained was determined as the total elongation (EL) of the hot rolled steel sheet.

[Hole Expansion Ratio ($\lambda$)]

The hole expansion ratio ($\lambda$) was measured by conducting a "JFS T 1001 hole expansion test method" of the Japan Iron and Steel Federation standard.

[LC Difference of Uniform Elongation ($uEL_C/uEL_L$ )]

The LC difference of the uniform elongation ($uEL_C/uEL_L$ ) was determined by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. More specifically, the value of the uniform elongation ($uEL_C$) of the C direction obtained divided by the uniform elongation ($uEL_L$) of the L direction was determined as the LC difference of uniform elongation ($uEL_C/uEL_L$ ).

[LC Difference of Ultimate Deformability ($\varepsilon_C/\varepsilon_L$)]

The LC difference of the ultimate deformability ($\varepsilon_C/\varepsilon_L$) was determined by taking JIS No. 5 test pieces from an orientation (L direction) of the long direction of the test piece becoming parallel to the rolling direction of the hot rolled steel sheet and the orientation (C direction) becoming parallel to the rolling perpendicular direction and conducting tensile tests based on JIS Z 2241: 2011. More specifically, the ultimate deformability was calculated by measuring the initial sheet thickness ($t_0$) of the parallel part before the tensile test and the sheet thickness ($t_f$) of the fractured part after the tensile test for each of the L direction test piece and C direction test piece and entering them into the following formula:

[Mathematical 9]

$$\varepsilon = \ln\left(\frac{t_0}{t_f}\right)$$

Next, the value of the ultimate deformability ($\varepsilon_C$) of the C direction obtained divided by the ultimate deformability ($\varepsilon_L$) of the L direction was determined as the LC difference of the ultimate deformability ($\varepsilon_C/\varepsilon_L$).

The case where the TS of the hot rolled steel sheet was 780 MPa or more, the λ was 50% or more, uELC /uEL$_L$ was 0.80 to 1.20, and $\varepsilon_C/\varepsilon_L$ was 0.70 to 1.30 was evaluated as a hot rolled steel sheet which was high strength yet was improved in hole expandability and reduced in difference of the uniform elongation and ultimate deformability in the L direction and C direction. The results are shown in Table 3.

In Table 3, "M+retained y" means the total of the martensite and retained austenite while "P+θ" means the total of the pearlite and cementite. Further, "M+retained γ maximum/average" means the ratio of the maximum value of the total and the average value of the total in the case of dividing the observed field of the steel structure in the sheet thickness direction at 2 μm intervals and measuring the total of the martensite and retained austenite at each divided region. Further, the "area ratio of grains of size more than 12 μm" means the ratio of the area which crystal grains having a size of more than 12 μm occupy with respect to the observed area. Further, the "maximum pole density" means the maximum pole density of the group of the {100}<011>, {211}<011>, {311}<011>, {110}<011>, and {332}<113> orientations at the texture measured at the sheet thickness center part of the hot rolled steel sheet.

[Table 3]

Table 3

| Prod. no. | Steel type | Steel structure | | | | | Texture | Surface roughness | Mechanical properties | | | | | Remarks |
|---|---|---|---|---|---|---|---|---|---|---|---|---|---|---|
| | | M+ retained γ | P+θ | Balance | M+ retained γ max. /average | Area ratio of grain size more than 12 μm | Maximum pole density | Number density of recessed parts with depths of more than 5 μm | TS | EL | λ | uELC /uELL | εC /εL | |
| | | Area% | Area% | - | - | % | - | /mm | MPa | % | % | - | - | |
| 1 | A | 8 | 0 | α+B | 1.8 | 21 | 5.2 | 0.1 | 839 | 19.1 | 87 | 0.93 | 0.92 | Inv. ex. |
| 2 | A | 6 | 0 | α+B | 4.2 | 23 | 5.5 | 0.1 | 815 | 15.7 | 62 | 0.91 | 0.64 | Comp. ex. |
| 3 | A | 8 | 0 | α+B | 3.4 | 23 | 5.4 | 0.2 | 827 | 15.8 | 63 | 0.90 | 0.61 | Comp. ex. |
| 4 | A | 11 | 0 | α+B | 1.5 | 10 | 5.9 | 1.3 | 852 | 18.0 | 84 | 0.94 | 0.72 | Inv. ex. |
| 5 | A | 8 | 0 | α+B | 1.4 | 19 | 5.7 | 1.2 | 838 | 18.8 | 89 | 0.93 | 0.73 | Inv. ex. |
| 6 | A | 8 | 0 | α+B | 1.6 | 20 | 5.5 | 1.4 | 840 | 19.3 | 88 | 0.92 | 0.73 | Inv. ex. |
| 7 | A | 9 | 0 | α+B | 3.2 | 11 | 5.3 | 0.2 | 829 | 17.4 | 67 | 0.89 | 0.65 | Comp. ex. |
| 8 | A | 1 | 5 | α+B | 2.0 | 28 | 4.8 | 0.2 | 737 | 23.4 | 45 | 0.93 | 0.96 | Comp. ex. |
| 9 | A | 7 | 0 | α+B | 1.7 | 12 | 9.0 | 0.0 | 858 | 16.5 | 43 | 0.66 | 0.74 | Comp. ex. |
| 10 | A | 10 | 0 | α+B | 1.5 | 15 | 8.4 | 0.2 | 847 | 16.9 | 47 | 0.68 | 0.73 | Comp. ex. |
| 11 | A | 9 | 0 | α+B | 1.6 | 14 | 8.5 | 0.0 | 832 | 17.4 | 42 | 0.69 | 0.71 | Comp. ex. |
| 12 | A | 11 | 0 | α+B | 1.4 | 60 | 5.3 | 0.1 | 799 | 16.6 | 45 | 0.88 | 0.85 | Comp. ex. |
| 13 | A | 10 | 0 | α+B | 1.7 | 22 | 9.0 | 0.1 | 844 | 16.7 | 44 | 0.65 | 0.73 | Comp. ex. |
| 14 | A | 5 | 4 | α+B | 1.6 | 30 | 4.5 | 0.1 | 787 | 19.9 | 46 | 0.94 | 0.90 | Comp. ex. |
| 15 | A | 5 | 4 | α+B | 1.8 | 17 | 5.9 | 0.1 | 790 | 19.4 | 48 | 0.92 | 0.91 | Comp. ex. |
| 16 | A | 1 | 0 | α+B | 2.0 | 20 | 5.6 | 0.2 | 750 | 19.2 | 96 | 0.95 | 0.94 | Comp. ex. |
| 17 | A | 9 | 0 | α+B | 2.4 | 23 | 5.2 | 0.2 | 841 | 18.5 | 66 | 0.95 | 0.81 | Inv. ex. |
| 18 | A | 8 | 0 | α+B | 2.6 | 19 | 5.6 | 0.2 | 833 | 18.3 | 68 | 0.90 | 0.82 | Inv. ex. |
| 19 | A | 7 | 0 | α+B | 1.7 | 0 | 7.0 | 0.0 | 835 | 17.7 | 71 | 0.83 | 0.82 | Inv. ex. |
| 20 | B | 14 | 0 | α+B | 1.6 | 11 | 5.8 | 0.2 | 851 | 18.3 | 81 | 0.92 | 0.90 | Inv. ex. |
| 21 | B | 32 | 0 | α+B | 1.2 | 13 | 6.1 | 0.1 | 974 | 13.8 | 31 | 0.88 | 0.85 | Comp. ex. |
| 22 | B | 33 | 0 | α+B | 1.2 | 30 | 6.3 | 0.1 | 967 | 13.5 | 34 | 0.87 | 0.83 | Comp. ex. |
| 23 | B | 35 | 0 | α+B | 1.1 | 27 | 6.3 | 0.0 | 971 | 13.9 | 33 | 0.88 | 0.84 | Comp. ex. |
| 24 | C | 6 | 0 | α+B | 1.5 | 19 | 5.9 | 0.1 | 802 | 20.0 | 85 | 0.90 | 0.92 | Inv. ex. |
| 25 | D | 5 | 0 | α+B | 2.6 | 10 | 5.5 | 0.2 | 805 | 18.6 | 88 | 0.93 | 0.83 | Inv. ex. |
| 26 | E | 9 | 0 | α+B | 1.6 | 24 | 5.3 | 0.0 | 1007 | 14.2 | 70 | 0.91 | 0.92 | Inv. ex. |
| 27 | F | 3 | 0 | α+B | 2.3 | 20 | 5.3 | 0.3 | 791 | 19.5 | 101 | 0.96 | 0.82 | Inv. ex. |
| 28 | F | 5 | 0 | α+B | 2.8 | 13 | 5.9 | 0.8 | 798 | 20.3 | 92 | 0.92 | 0.81 | Inv. ex. |
| 29 | G | 21 | 0 | α+B | 1.3 | 28 | 4.8 | 0.0 | 869 | 16.1 | 63 | 0.95 | 0.85 | Inv. ex. |
| 30 | G | 9 | 0 | α+B | 1.4 | 16 | 6.0 | 0.0 | 845 | 18.8 | 87 | 0.87 | 0.90 | Inv. ex. |
| 31 | I | 7 | 0 | α+B | 1.4 | 13 | 6.1 | 0.1 | 853 | 19.0 | 90 | 0.86 | 0.91 | Inv. ex. |
| 32 | J | 8 | 0 | α+B | 1.5 | 19 | 5.6 | 1.5 | 868 | 17.1 | 84 | 0.90 | 0.72 | Inv. ex. |
| 33 | K | 0 | 0 | α+B | - | 15 | 5.7 | 0.0 | 642 | 24.4 | 112 | 0.97 | 0.95 | Comp. ex. |
| 34 | L | 12 | 0 | α+B | 3.3 | 21 | 6.3 | 0.1 | 907 | 16.1 | 69 | 0.84 | 0.60 | Comp. ex. |
| 35 | M | 14 | 0 | α+B | 1.7 | 25 | 4.6 | 0.2 | 735 | 21.3 | 74 | 0.95 | 0.84 | Comp. ex. |
| 36 | N | 3 | 0 | α+B | 1.7 | 33 | 8.3 | 0.2 | 909 | 15.9 | 46 | 0.67 | 0.70 | Comp. ex. |
| 37 | O | 18 | 0 | α+B | 1.3 | 64 | 5.7 | 2.3 | 1015 | 12.6 | 18 | 0.90 | 0.72 | Comp. ex. |
| 38 | P | 0 | 4 | α+B | - | 18 | 5.1 | 0.0 | 670 | 23.5 | 68 | 0.90 | 0.91 | Comp. ex. |
| 39 | Q | 32 | 0 | α+B | 1.2 | 17 | 6.2 | 0.2 | 1026 | 12.6 | 38 | 0.88 | 0.80 | Comp. ex. |
| 40 | R | 33 | 0 | α+B | 1.1 | 15 | 6.0 | 0.2 | 1011 | 13.3 | 35 | 0.87 | 0.83 | Comp. ex. |
| 41 | S | 13 | 0 | α+B | 1.2 | 79 | 5.3 | 0.0 | 875 | 15.8 | 36 | 0.90 | 0.77 | Comp. ex. |
| 42 | A | 4 | 1 | α+B | 1.4 | 20 | 3.4 | 0.1 | 798 | 18.4 | 91 | 0.92 | 0.95 | Inv. ex. |

Underlines indicate production conditions not preferable.

Referring to Tables 1 to 3, in Comparative Example 2, in the continuous casting step, formula (1) was not satisfied, and therefore it is believed that Mn segregation could not be sufficiently suppressed. As a result, the variation in martensite and retained austenite in the sheet thickness direction became greater, i.e., when dividing the observed field of the steel structure in sheet thickness direction in 2 $\mu$m intervals and measuring the total of the martensite and retained austenite in each divided region, the maximum value of the total became greater than 3.0 times the average value of the total, and the LC difference of the ultimate deformability became larger. In Comparative Example 3, in the continuous casting step, formula (3) was not satisfied, and therefore it is believed that Mn segregation could not be sufficiently suppressed. As a result, the variation in martensite and retained austenite in the sheet thickness direction became greater and the LC difference of the ultimate deformability became larger. In Comparative Example 7, in the rough rolling, the number of times of rolling by a steel sheet temperature of 1000°C or more and a rolling reduction of more than 20% was small, and therefore it is believed the diffusion of Mn could not be promoted and Mn segregation could not be sufficiently suppressed. As a result, the variation in martensite and retained austenite in the sheet thickness direction became greater and the LC difference of the ultimate deformability became larger. In Comparative Example 8, the air cooling time in the cooling step was long, and therefore martensite could not be sufficiently formed and further pearlite was excessively formed and the TS and the $\lambda$ fell. In Comparative Example 9, the requirement of the rolling reduction in each rolling pass in the last three passes of the finish rolling being 25% or less was not satisfied and furthermore the cumulative rolling reduction of the last three passes was high, and therefore excessive strain was introduced and due to this the maximum pole density could not be controlled to 8.0 or less. As a result, the $\lambda$ fell and the LC difference of uniform elongation became larger. In Comparative Example 10, the time t1 between the rolling pass two passes before the last and the rolling pass one pass before the last in the finish rolling and the time t2 between the rolling pass one pass before the last and the last pass were short, and therefore recrystallization did not sufficiently proceed and strain was accumulated and the maximum pole density could not be controlled to 8.0 or less. As a result, the $\lambda$ fell and the LC difference of uniform elongation became larger. In Comparative Example 11, the time t3 from the last pass to the start of cooling at the finish rolling was short, and therefore recrystallization did not sufficiently proceed and strain accumulated and the maximum pole density could not be controlled to 8.0 or less. As a result, the $\lambda$ fell and the LC difference of uniform elongation became larger. In Comparative Example 12, the cumulative rolling reduction of the last three passes at the finish rolling was low, and therefore recrystallization did not proceed and the crystal grains could not be sufficiently refined. As a result, the ratio of the area which crystal grains having a size of more than 12 $\mu$m occupy with respect to the observed area of the steel structure exceeded 50% and the $\lambda$ fell.

In Comparative Example 13, the entry side temperature two passes before the last was low and further the exit side temperature of the last pass was low, and therefore recrystallization did not sufficiently proceed and strain accumulated and maximum pole density could not be controlled to 8.0 or less. As a result, the $\lambda$ fell and the LC difference of uniform elongation became larger. In each of Comparative Examples 14 and 15, the average cooling speed of the primary cooling and secondary cooling in the respective cooling step was low, and therefore pearlite was excessively formed and the $\lambda$ fell. In Comparative Example 16, the coiling temperature in the cooling step was high, and therefore martensite could not be sufficiently formed and the TS fell. In each of Comparative Examples 21 to 23, the air-cooling time in the cooling step was short or air-cooling was not performed, and therefore martensite and/or retained austenite were excessively formed and the $\lambda$ fell. In Comparative Example 33, the C content was low, and therefore martensite was not formed and the TS fell. In Comparative Example 34, the C content was high, and therefore it is believed that at the time of solidification in the continuous casting step, the structure could not be made a single $\delta$ phase and Mn segregation could not be sufficiently suppressed. As a result, the variation of martensite and retained austenite in the sheet thickness direction became larger and the LC difference of the ultimate deformability became larger. In Comparative Example 35, the Ti content was low, and therefore precipitation hardening by Ti carbides could not be sufficiently obtained and the TS fell. In Comparative Example 36, the Ti content was high, and therefore it is believed that coarse Ti carbides were formed. As a result, the $\lambda$ fell and the LC difference of uniform elongation became larger. In Comparative Example 37, the Si content was high, and therefore many coarse crystal grains were formed. As a result, the ratio of the area which crystal grains having a size of more than 12 $\mu$m occupy with respect to the observed area of the steel structure exceeded 50% and the $\lambda$ fell. In Comparative Example 38, the Mn content was low, and therefore martensite was not formed and the TS fell. In Comparative Example 39, the Mn content was high, and therefore martensite as excessively formed and the $\lambda$ fell. In Comparative Example 40, the Al content was low, and therefore the desired structure was not obtained and the $\lambda$ fell. In Comparative Example 41, the Al content was high, and therefore many coarse crystal grains were formed. As a result, the ratio of the area which crystal grains having a size of more than 12 $\mu$m occupy with respect to the observed area of the steel structure exceeded 50% and the $\lambda$ fell.

In contrast to this, in the hot rolled steel sheets according to all of the invention examples, by having predetermined chemical compositions and further suitably controlling the conditions in the method of production, it was possible to configure the steel structure to include an area% of the total of the martensite and retained austenite of 2 to 30% to achieve a high strength with a tensile strength of 780 MPa or more. Further, by limiting the ratio of the area which crystal grains having a size of more than 12 $\mu$m occupy with respect to the observed area in the steel structure to 50% or less and controlling the maximum pole density of the group of {100}<011>, {211}<011>, {311}<011>, {110}<011>, and {332}<113> orientations at the texture measured at the sheet thickness center part of the hot rolled steel sheet to 8.0 or less, it was possible to increase the $\lambda$ and reduce the LC difference of uniform elongation. In addition, when dividing the observed field of the steel structure in the sheet thickness direction in 2 $\mu$m intervals if measuring the total of the martensite and retained austenite in each divided region, it was possible to reduce the LC difference of the ultimate deformability by controlling the maximum value of the total to 3.0 times or less of the average value of the total.

In particular, in Invention Examples 1, 17 to 20, 24 to 31, and 42, by limiting the Si content in the steel to 0.500% or less and performing the descaling before the finish rolling under suitable conditions, the number density of recessed parts with a depth of more than 5 $\mu$m present at the surface of the hot rolled steel sheet became 1.0/mm or less per surface length, as a result, $\varepsilon_C/\varepsilon_L$ was controlled to within a range of 0.80 to 1.30, and the LC difference of the ultimate deformability could be further remarkably reduced.

**Claims**

1.    A hot rolled steel sheet having a chemical composition comprising, by mass%,

C: 0.025 to 0.080%,
Si: 0.001 to 2.000%,
Mn: 1.000 to 2.000%,
Ti: 0.080 to 0.200%,
Al: 0.200 to 1.000%,
P: 0.050% or less,
S: 0.0100% or less,
N: 0.0100% or less,
O: 0.0100% or less,
Cr: 0 to 1.00%,
Mo: 0 to 1.00%,
Cu: 0 to 1.00%,
Ni: 0 to 1.00%,
Co: 0 to 1.00%,
Nb: 0 to 0.200%,
V: 0 to 1.00%,
W: 0 to 1.00%,
Sn: 0 to 1.00%,
Sb: 0 to 0.50%,
Zn: 0 to 1.00%,
B: 0 to 0.0050%,
Ca: 0 to 0.0100%,
Mg: 0 to 0.0100%,
Zr: 0 to 0.0100%,
Bi: 0 to 0.0100%,
Hf: 0 to 0.0100%,
As: 0 to 0.1000%,
REM: 0 to 0.0100%, and
balance: Fe and impurities, and
a steel structure at a cross-section of a rolling direction of an observed range centered at 1/4 thickness from a surface comprising, by area%,
total of martensite and retained austenite: 2 to 30%,
total of pearlite and cementite: 0 to 3%, and
balance: ferrite and bainite, wherein
a ratio of an area which crystal grains having a size of more than 12 $\mu$m occupy with respect to an observed area is 50% or less,
in a texture measured at a sheet thickness center part, a maximum pole density of a group of {100}<011>, {211} <011>, {311}<011>, {110}<011>, and {332}<113> orientations is 8.0 or less, and
when dividing an observed field of the steel structure in a sheet thickness direction at 2 $\mu$m intervals and measuring the total of the martensite and retained austenite at each divided region, a maximum value of the total is 3.0 times or less of an average value of the total.

2.    The hot rolled steel sheet according to claim 1, wherein the chemical composition includes, by mass%, Si: 0.001 to 0.500% and a number density of recessed parts with a depth of more than 5 μm present at a surface is 1.0/mm or less per surface length.

3. The hot rolled steel sheet according to claim 1 or claim 2, wherein the chemical composition includes, by mass%, at least one of

Cr: 0.001 to 1.00%,
Mo: 0.001 to 1.00%,
Cu: 0.001 to 1.00%,
Ni: 0.001 to 1.00%,
Co: 0.001 to 1.00%,
Nb: 0.001 to 0.200%,
V: 0.001 to 1.00%,
W: 0.001 to 1.00%,
Sn: 0.001 to 1.00%,
Sb: 0.001 to 0.50%,
Zn: 0.001 to 1.00%,
B: 0.0001 to 0.0050%,
Ca: 0.0001 to 0.0100%,
Mg: 0.0001 to 0.0100%,
Zr: 0.0001 to 0.0100%,
Bi: 0.0001 to 0.0100%,
Hf: 0.0001 to 0.0100%,
As: 0.0001 to 0.1000%, and
REM: 0 to 0.0100%.

4. The hot rolled steel sheet according to claim 1 or 2, wherein the hot rolled steel sheet is a plated steel sheet provided with a plating layer on at least one surface.

5. A part including the hot rolled steel sheet according to claim 1 or 2.

## INTERNATIONAL SEARCH REPORT

| International application No. |
| --- |
| **PCT/JP2023/036500** |

| A. | CLASSIFICATION OF SUBJECT MATTER |
| --- | --- |

*C22C 38/00*(2006.01)i; *C22C 38/60*(2006.01)i; *C21D 8/02*(2006.01)n; *C21D 9/46*(2006.01)n
FI:　C22C38/00 301W; C22C38/60; C21D8/02 A; C21D9/46 T; C21D9/46 U

According to International Patent Classification (IPC) or to both national classification and IPC

| B. | FIELDS SEARCHED |
| --- | --- |

Minimum documentation searched (classification system followed by classification symbols)

C22C38/00-38/60; C21D8/02; C21D9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2019/009410 A1 (NIPPON STEEL & SUMITOMO METAL CORPORATION) 10 January 2019 (2019-01-10)<br>　　claims | 1-5 |
| A | JP 2014-141703 A (NIPPON STEEL & SUMITOMO METAL CORPORATION) 07 August 2014 (2014-08-07)<br>　　claims | 1-5 |
| A | JP 2020-204051 A (JFE STEEL CORPORATION) 24 December 2020 (2020-12-24)<br>　　claims | 1-5 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/036500**

| Patent document cited in search report | | | Publication date (day/month/year) | Patent family member(s) | | | Publication date (day/month/year) |
|---|---|---|---|---|---|---|---|
| WO | 2019/009410 | A1 | 10 January 2019 | EP claims | 3650569 | A1 | |
| | | | | US | 2021/0140005 | A1 | |
| | | | | CN | 110832098 | A | |
| JP | 2014-141703 | A | 07 August 2014 | (Family: none) | | | |
| JP | 2020-204051 | A | 24 December 2020 | (Family: none) | | | |

Form PCT/ISA/210 (patent family annex) (January 2015)

**REFERENCES CITED IN THE DESCRIPTION**

**Patent documents cited in the description**

- WO 2017022025 A
- WO 2019009410 A